(19) Europäisches Patentamt
European Patent Office
Office européen des brevets

(11) EP 2 677 352 B1

(12) **EUROPEAN PATENT SPECIFICATION**

(45) Date of publication and mention of the grant of the patent:
**22.05.2019 Bulletin 2019/21**

(21) Application number: **12747322.1**

(22) Date of filing: **15.02.2012**

(51) Int Cl.:
***B32B 7/06*** *(2019.01)*
***B32B 17/10*** *(2006.01)*
***C08J 7/04*** *(2006.01)*
***G02B 5/30*** *(2006.01)*
*C03C 17/34* *(2006.01)*

(86) International application number:
**PCT/JP2012/053550**

(87) International publication number:
**WO 2012/111715 (23.08.2012 Gazette 2012/34)**

(54) **INFRARED LIGHT REFLECTION PLATE,LAMINATED INTERLAYER SHEET FOR LAMINATED GLASS, LAMINATED GLASS, AND METHODS FOR MANUFACTURING THE SAME**

INFRAROT-REFLEXIONSPLATTE, ZWISCHENSCHICHT FÜR EIN VERBUNDGLAS, VERBUNDGLAS UND HERSTELLUNGSVERFAHREN DAFÜR

PLAQUE DE RÉFLEXION INFRAROUGE, FEUILLE INTER-COUCHE POUR VERRE FEUILLETÉ, VERRE FEUILLETÉ ET PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2011 JP 2011033647**

(43) Date of publication of application:
**25.12.2013 Bulletin 2013/52**

(73) Proprietor: **FUJIFILM Corporation**
**Tokyo 106-8620 (JP)**

(72) Inventor: **WATANABE Hidetoshi**
**Ashigarakami-gun**
**Kanagawa 258-8577 (JP)**

(74) Representative: **Hoffmann Eitle**
**Patent- und Rechtsanwälte PartmbB**
**Arabellastraße 30**
**81925 München (DE)**

(56) References cited:
**WO-A1-2009/153287**
**WO-A1-2010/143682**
**WO-A1-2010/143683**
**WO-A1-2010/143683**
**WO-A1-2010/143684**
**JP-A- H04 281 403**
**JP-A- 2011 154 215**
**US-A1- 2007 109 673**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 677 352 B1

## Description

### Technical Field

The present invention relates to an infrared light reflection plate having a plurality of light reflection layers formed by fixing a cholesteric liquid crystalline phase which is mainly used for the heat shielding of windows in buildings, vehicles and the like. In addition, the invention relates to an infrared light reflection layer laminate which is the infrared light reflection plate with a substrate removed, a laminated interlayer sheet for infrared light reflection laminated glass in which the infrared light reflection layer laminate or the infrared light reflection plate is used, laminated glass in which the laminated interlayer sheet for glass is used, and methods for manufacturing the same.

### Background Art

Recently, an increasing interest in the environment and energy has created an increasing need for energy saving-related industrial products, and, as one of such products, there is a demand for glass and films having an effect of shielding heat for window glass in houses, vehicles and the like, that is, an effect of reducing sun light-caused thermal load. In order to reduce the sun light-caused thermal load, it is necessary to prevent the transmission of sun light rays in either of visible light range and infrared range in the sun light spectrum.

Multilayer glass coated with a special metal film that shields heat radiation, which is called Low-E pair glass, is frequently used as highly heat-insulating and heat-shielding eco-glass. The special metal film can be produced by laminating a plurality of layers using, for example, a vacuum film-forming method disclosed in Patent Literature 1. A coat of the special metal film produced using the vacuum film-forming method is extremely excellent in terms of reflection performance, but a vacuum process is poorly productive and highly costly for production. In addition, since use of the metal film shields electromagnetic waves at the same time, there is a problem in that radio disturbance is caused when mobile phones and the like are used or ETC cannot be used in a case in which the metal film is used in vehicles.

Patent Literature 2 proposes a heat radiation-reflecting transparent base material having a layer that contains fine metal particles. A fine metal particle-containing film is excellent in terms of the transmission performance of visible light, but there are problems in that the reflectivity is low with respect to light in a wavelength range of 700 nm to 1200 nm, which is highly involved in heat shielding, and it is not possible to increase the heat-shielding performance.

In addition, Patent Literature 3 discloses a heat radiation-shielding sheet having a layer that includes an infrared ray-absorbing pigment. When the infrared ray-absorbing pigment is used, it is possible to decrease solar transmittance, but there are problems in that the absorption of solar insolation increases the temperature on the film surface and the re-radiation of the heat degrades the heat shielding performance.

In addition, Patent Literature 4 discloses a laminated optical film which includes a phase difference film with predetermined characteristics and a reflection-type circularly polarizing plate and has a reflecting power with respect to infrared rays, and discloses an example in which a cholesteric liquid crystalline phase is used as the phase difference film.

In addition, Patent Literature 5 discloses an infrared light reflection article having a visible light-transmitting substrate and an infrared light reflection cholesteric liquid crystalline layer.

In addition, Patent Literature 6 discloses a polarization element having a plurality of cholesteric liquid crystalline layers, but a laminate formed by laminating cholesteric liquid crystalline layers as described in Patent Literature 6 is mainly used to efficiently reflect light in a visible light range.

In addition, Patent Literature 7 discloses a circularly polarizing extraction optical element formed by laminating a plurality of liquid crystalline layers in which the directions of the helical axes of liquid crystalline molecules substantially coincide and the rotation directions of the liquid crystalline molecules are the same.

In actual cases, it is difficult to completely reflect light having a specific wavelength using a light reflection film having a light reflection layer formed by fixing a cholesteric liquid crystalline phase, and, in general, it is common to use a special wave plate called a $\lambda/2$ plate. For example, in Patent Literature s 4 and 5, attempts are made to reflect right circularly polarized light and left circularly polarized light having predetermined wavelengths by forming light reflection layers formed by fixing a cholesteric liquid crystalline phase, which have optical rotations in the same direction and have the same spiral pitches, respectively on both surfaces of a $\lambda/2$ plate.

However, the $\lambda/2$ plate is a special wave plate as described above, and the manufacturing of the plate is difficult, which increases the production cost. In addition, the material is limited to special materials, and, consequently, there are cases in which use is limited. Furthermore, in general, the $\lambda/2$ plate works as a $\lambda/2$ plate with respect to light incident on a layer surface from the normal direction; however, strictly speaking, does not function as a $\lambda/2$ plate with respect to light incident at a slant. Therefore, in a $\lambda/2$ plate-combined configuration, there is a problem in that it is not possible to completely reflect light incident from a slanting direction.

In addition, since the cholesteric liquid crystalline layer has a characteristic in which a reflection band of wavelength changes depending on the angle of incident light (when the incident angle becomes slanted, the reflection band

shifts toward the short wavelength side), even a cholesteric liquid crystalline layer intended to reflect infrared light only reflects visible light when light is incident from a slanting direction, and the reflected light tends to appear reddish to yellowish. In a case in which an infrared light reflection article of the cholesteric liquid crystalline layer is used in, for example, window glass in houses, vehicles and the like, there is a problem of degradation of visibility as window glass, limitation in outlook design or the like.

Citation List

Patent Literature

[Patent Literature 1] JP-A-6-263486
[Patent Literature 2] JP-A-2002-131531
[Patent Literature 3] JP-A-6-194517
[Patent Literature 4] Japanese Patent No. 4109914
[Patent Literature 5] JP-T-2009-514022
[Patent Literature 6] Japanese Patent No. 3500127
[Patent Literature 7] Japanese Patent No. 3745221

Summary of Invention

Technical Problem

Therefore, for the infrared light reflection plate having a plurality of light reflection layers formed by fixing a cholesteric liquid crystalline phase, there were demands for improving reflection characteristics without essentially using the $\lambda/2$ plate and for improving the selective reflection characteristics of the infrared light reflection plate having a plurality of light reflection layers formed by fixing a cholesteric liquid crystalline phase.

As a result, an object of the invention for solving the above problems is to provide an infrared light reflection layer laminate and an infrared light reflection plate which can suppress the color of reflected light in a slanting direction and is highly heat shielding. Furthermore, another object is to provide methods for manufacturing an infrared light reflection layer laminate and an infrared light reflection plate in which an infrared light reflection layer laminate and an infrared light reflection plate satisfying the above characteristics can be manufactured at low cost.

Solution to Problem

In order to achieve the above objects, the present inventors thoroughly studied and consequently found that, when two or more sets of light reflection layers formed by fixing cholesteric liquid crystalline phases having mutually opposite optical rotations (that is, right or left optical rotation) are disposed on a substrate, it is possible to reflect both of left circularly polarized light and right circularly polarized light in the wavelength ranges and, furthermore, a more favorable heat shielding performance can be obtained by setting the central wavelengths of selective reflections of the respective sets into a predetermined range. Furthermore, it was found that, when the location of the short wavelength-side wavelength of the reflection band is set to 790 nm or more for the light reflection layer on the short wavelength side, the color of reflected light in a slanting direction can be suppressed. Based on the above findings, the invention was completed.

Means for achieving the objects are as follows.

[1] An infrared light reflection layer laminate includes a light reflection layer X1, a light reflection layer X2, a light reflection layer X3, a light reflection layer X4 and a light reflection layer X5 each of which is formed by fixing a cholesteric liquid crystalline phase. The light reflection layer X1 and the light reflection layer X2 reflect circularly polarized light in mutually opposite directions, and a reflection central wavelength $\lambda_1$ (nm) of the light reflection layer X1 and a reflection central wavelength $\lambda_1'$ (nm) of the light reflection layer X2 are substantially equal and both are in a range of 1190 nm to 1290 nm. The light reflection layer X3 and the light reflection layer X4 reflect circularly polarized light in mutually opposite directions, and a reflection central wavelength $\lambda_2$ (nm) of the light reflection layer X3 and a reflection central wavelength $\lambda_2'$ (nm) of the light reflection layer X4 are substantially equal and both are in a range of 1010 nm to 1070 nm. A reflection central wavelength $\lambda_3$ (nm) of the light reflection layer X5 is in a range of 850 nm to 900 nm. A reflectivity at a wavelength of 790 nm is 15% or less, and infrared rays are reflected.

[2] In the infrared light reflection layer laminate according to [1], a reflectivity at a wavelength of 800 nm is in a range

of 15% to 50%.

[3] In the infrared light reflection layer laminate according to [1] or [2], at least one light reflection layer of the light reflection layers is a layer formed by making a liquid crystal composition coated on a surface of the lower light reflection layer into a cholesteric liquid crystalline phase and fixing the cholesteric liquid crystalline phase.

[4] In the infrared light reflection layer laminate according to any one of [1] to [3], the light reflection layer X1 and the light reflection layer X2 do not adjoin, and the light reflection layer X3 and the light reflection layer X4 do not adjoin.

[5] An infrared light reflection layer laminate includes a light reflection layer X1, a light reflection layer X2, a light reflection layer X3, a light reflection layer X4, a light reflection layer X5 and a light reflection layer X6 each of which is formed by fixing a cholesteric liquid crystalline phase . The light reflection layer X1 and the light reflection layer X2 reflect circularly polarized light in mutually opposite directions, and a reflection central wavelength $\lambda_1$ (nm) of the light reflection layer X1 and a reflection central wavelength $\lambda_1$' (nm) of the light reflection layer X2 are substantially equal and both are in a range of 1190 nm to 1290 nm. The light reflection layer X3 and the light reflection layer X4 reflect circularly polarized light in mutually opposite directions, and a reflection central wavelength $\lambda_2$ (nm) of the light reflection layer X3 and a reflection central wavelength $\lambda_2$' (nm) of the light reflection layer X4 are substantially equal and both are in a range of 1010 nm to 1070 nm. The light reflection layer X5 and the light reflection layer X6 reflect circularly polarized light in mutually opposite directions, and a reflection central wavelength $\lambda_3$ (nm) of the light reflection layer X5 and a reflection central wavelength $\lambda_3$' (nm) of the light reflection layer X6 are substantially equal and both are in a range of 850 nm to 900 nm. A reflectivity at a wavelength of 790 nm is 15% or less, and infrared rays are reflected.

[6] In the infrared light reflection layer laminate according to [5], a reflectivity at a wavelength of 800 nm is in a range of 15% to 50%.

[7] In the infrared light reflection layer laminate according to [5] or [6], at least one light reflection layer of the light reflection layers is a layer formed by making a liquid crystal composition coated on a surface of the lower light reflection layer into a cholesteric liquid crystalline phase and fixing the cholesteric liquid crystalline phase.

[8] In the infrared light reflection layer laminate according to any one of [5] to [7], the light reflection layer X1 and the light reflection layer X2 adjoin, and the light reflection layer X5 and the light reflection layer X6 are laminated with at least two light reflection layers therebetween.

[9] An infrared light reflection plate including a substrate; and the infrared light reflection layer laminate according to any one of [1] to [8] disposed on the substrate.

[10] In the infrared light reflection plate according to [9], the substrate is a polymer film.

[11] A laminated interlayer sheet for glass including the infrared light reflection layer laminate according to any one of [1] to [8] or the infrared light reflection plate according to [9] or [10]; and an interlayer sheet disposed on an outermost layer of at least one of the infrared light reflection layer laminate and the infrared light reflection plate.

[12] The laminated interlayer sheet for glass according to [11] including interlayer sheets respectively on the outermost layers of both the infrared light reflection layer laminate and the infrared light reflection plate.

[13] Laminated glass including two pieces of glass; and the laminated interlayer sheet for glass according to [11] or [12] included between the two pieces of glass.

[14] In the laminated glass according to [13], at least one of the two pieces of glass is heat radiation-absorbing glass, the heat radiation-absorbing glass has a visible light transmittance under a standard A light source in a range of 80% to 90%, and a main wavelength measured using the standard A light source is in a range of 495 nm to 560 nm.

[15] A method for manufacturing a laminated interlayer sheet for laminated glass including a first step of adhering a first interlayer sheet on one surface of the infrared light reflection plate according to [9] or [10] so as to obtain a first laminate; and a second step of adhering a second interlayer sheet on a surface of the first laminate opposite to the surface to which the first interlayer sheet is adhered.

[16] The method for manufacturing a laminated interlayer sheet for glass according to [15] including a step of, in the first step, peeling off the substrate included in the infrared light reflection plate from the first laminate at the same time as or after a step of adhering the infrared light reflection plate and the first interlayer sheet; and a step of, in the second step, adhering the second interlayer sheet to the surface of the first laminate from which the substrate has been peeled off.

[17] A method for manufacturing laminated glass including a step of manufacturing a laminate sandwiched between two glass plates by sandwiching the laminated interlayer sheet for laminated glass according to [11] or [12] between the two glass plates; and a step of pressing the laminate sandwiched between the glass plates under heating.

[18] A window member for buildings or vehicles in which the infrared light reflection layer laminate according to any one of [1] to [8], the infrared light reflection plate according to [9] or [10], the laminated interlayer sheet for glass according to [11] or [12], or the laminated glass according to either one of [13] and [14] is used.

Advantageous Effects of Invention

According to the invention, it is possible to provide an infrared light reflection layer laminate and an infrared light reflection plate which can suppress a change in the color of reflected light in a slanting direction and is highly heat shielding.

Brief Description of Drawings

Fig. 1 is a cross-sectional view of an example of an infrared light reflection plate of the invention.
Fig. 2 is a cross-sectional view of an example of the infrared light reflection plate of the invention.
Fig. 3 is a cross-sectional view of an example of a laminated interlayer sheet for laminated glass of the invention.
Fig. 4 is a cross-sectional view of an example of the laminated interlayer sheet for laminated glass of the invention.
Fig. 5 is a cross-sectional view of an example of the laminated interlayer sheet for laminated glass of the invention.
Fig. 6 is a cross-sectional view of an example of laminated glass of the invention.
Fig. 7 is a cross-sectional view of an example of the laminated glass of the invention.
Fig. 8 is a cross-sectional view of an example of the laminated glass of the invention.
Fig. 9 is a graph illustrating an intensity distribution of solar light energy.

Description of Embodiments

Hereinafter, the invention will be described in detail. Configuration requirements described below will be sometimes described based on typical embodiments of the invention, but the invention is not limited to the embodiments. Meanwhile, a numerical range expressed using "to" in the present specification includes numerical values before and after "to" in the range as the upper limit value and the lower limit value. Meanwhile, in the specification, a laminate sandwiched between glass plates refers to an article obtained by laminating a glass plate/ an interlayer/ an infrared light reflection layer laminate (or infrared light reflection plate)/ an interlayer/ a glass plate in this order, which is to be pressed under heating. In addition, laminated glass refers to an article obtained by pressing the laminate sandwiched between glass plates under heating.

In addition, in the specification, a refractive index anisotropy $\Delta n$ of a layer formed by fixing a cholesteric liquid crystalline phase is defined as follows.

In the specification, the refractive index anisotropy $\Delta n$ of a layer formed by fixing a cholesteric liquid crystalline phase refers to $\Delta n$ at a wavelength at which the selective reflection characteristics are exhibited (specifically, in the vicinity of a wavelength of 1000 nm) . Specifically, first, a layer in which a cholesteric liquid crystalline phase having a spiral axis uniformly oriented with respect to a film surface is fixed is formed as a sample on a substrate (glass or film) that has been subjected to an orientation treatment or is provided with an oriented film. The selective reflection of the layer is measured, and the peak width Hw is obtained. In addition, the spiral pitch p of the sample is separately measured. The spiral pitch can be measured by observing a cross-section using a TEM. The refractive index anisotropy $\Delta n$ of the sample can be obtained by substituting the above values into the following formula.

$$\Delta n = Hw/p$$

In addition, in the specification, the "reflection central wavelength" refers to a wavelength at which the maximum peak of a reflection spectrum measured from the front surface direction (substantially a direction within 5° from the front surface) is exhibited.

In addition, in the specification, it is needless to say that generally permitted errors in the technical field to which the invention belongs are also taken into account in the expression "the reflection central wavelengths of the respective layers are (mutually) substantially equal". Generally, the reflection central wavelengths are also considered to be substantially equal when there is a difference of approximately ±30 nm, and the difference is preferably ±20 nm or less, and more preferably ±10 nm or less.

[Infrared light reflection layer laminate and infrared light reflection plate]

The infrared light reflection layer laminate of the invention includes a light reflection layer X1, a light reflection layer X2, a light reflection layer X3, a light reflection layer X4 and a light reflection layer X5 each of which is formed by

fixing a cholesteric liquid crystalline phase; the light reflection layer X1 and the light reflection layer X2 reflect circularly polarized light in mutually opposite directions, and a reflection central wavelength $\lambda_1$ (nm) of the light reflection layer X1 and a reflection central wavelength $\lambda_1$' (nm) of the light reflection layer X2 are substantially equal and both are in a range of 1190 nm to 1290 nm; the light reflection layer X3 and the light reflection layer X4 reflect circularly polarized light in mutually opposite directions, and a reflection central wavelength $\lambda_2$ (nm) of the light reflection layer X3 and a reflection central wavelength $\lambda_2$' (nm) of the light reflection layer X4 are substantially equal and both are in a range of 1010 nm to 1070 nm; a reflection central wavelength $\lambda_3$ (nm) of the light reflection layer X5 is in a range of 850 nm to 900 nm; a reflectivity at a wavelength of 790 nm is 15% or less, and infrared rays are reflected.

In addition, the infrared light reflection plate of the invention includes a substrate and the infrared light reflection layer laminate of the invention disposed on the substrate.

The infrared light reflection plate of the invention may be used in a form of being integrated with another support member such as laminated glass. At this time, not only the light reflection layer but also the substrate may be integrated with another support member, or only the light reflection layer may be integrated with the support member by peeling off the substrate. That is, the infrared light reflection layer laminate of the invention may or may not include the substrate, and, for example, an infrared light reflection layer laminate which has two interlayers for laminated glass sandwiched between laminated glass, but does not include the substrate is also included in the invention.

Hereinafter, preferable aspects of the invention will be described. Meanwhile, common facts of the infrared light reflection plate of the invention and the infrared light reflection layer laminate of the invention will be described in the description of the infrared light reflection plate of the invention.

<Configuration of the infrared light reflection layer laminate and the infrared light reflection plate>

Hereinafter, preferable embodiments of the infrared light reflection layer laminate and the infrared light reflection plate of the invention will be described using the accompanying drawings.

(Aspect in which five light reflection layers are present)

An infrared light reflection plate illustrated in Fig. 1 includes a light reflection layer X1 (hereinafter also referred to as a light reflection layer 14a), a light reflection layer X2 (hereinafter also referred to as a light reflection layer 14b), a light reflection layer X3 (hereinafter also referred to as a light reflection layer 16a), a light reflection layer X4 (hereinafter also referred to as a light reflection layer 16b) and a light reflection layer X5 (hereinafter also referred to as a light reflection layer 18 or a light reflection layer 18a), each of which is formed by fixing a cholesteric liquid crystalline phase, on one surface of a substrate 12. In the invention, the laminating order of the light reflection layers 14a, 14b, 16a, 16b and 18 from the substrate 12 is not particularly limited, and infrared light reflection plates having a laminating order other than the order illustrated in Fig. 1 are also included in the invention. In the invention, among those laminating orders, the fact that the light reflection layers 14a and 14b adjoin and the light reflection layers 16a and 16b adjoin as illustrated in Fig. 1 is preferable in a case in which particularly the heat shielding performance is emphasized and enhanced. In addition, the five light reflection layers do not always need to be laminated on one surface of the substrate, and one or more light reflection layers may be laminated on both surfaces of the substrate.

Since the light reflection layers 14a, 14b, 16a, 16b and 18 are layers formed by fixing a cholesteric liquid crystalline phase, selective light reflection properties in which light having a specific wavelength is reflected based on the spiral pitch of the cholesteric liquid crystalline phase are exhibited. In an embodiment of the invention, in the adjoining light reflection layers 14a and 14b, the spiral directions of the respective cholesteric liquid crystalline phases are mutually opposite, and the reflection central wavelengths $\lambda_1$ and $\lambda_1$' are substantially equal (hereinafter, when $\lambda_1$ and $\lambda_1$' are substantially equal, $\lambda_1$ and $\lambda_1$' will also be collectively referred to as $\lambda_{14}$). In addition, similarly, in the adjoining light reflection layers 16a and 16b, the spiral directions of the respective cholesteric liquid crystalline phases are mutually opposite, and the reflection central wavelengths $\lambda_2$ and $\lambda_2$' are substantially equal (hereinafter, when $\lambda_2$ and $\lambda_2$' are substantially equal, $\lambda_2$ and $\lambda_2$' will also be collectively referred to as $\lambda_{16}$). In the light reflection layer 18, the reflection central wavelength is $\lambda_{18}$, and the spiral direction may be either of right spiral and left spiral. In the embodiment, since $\lambda_{14}$, $\lambda_{16}$ and $\lambda_{18}$ are respectively different, left circularly polarized light and right circularly polarized light having the predetermined wavelength $\lambda_{14}$ are selectively reflected using the light reflection layers 14a and 14b, left circularly polarized light and right circularly polarized light having the wavelength $\lambda_{16}$ that is different from the wavelength $\lambda_{14}$ are selectively reflected using the light reflection layers 16a and 16b, furthermore, either left circularly polarized light or right circularly polarized light is selectively reflected at the light reflection layer 18, and, as a whole, the band of reflection characteristics is widened.

The infrared light reflection layer laminate and the infrared light reflection plate of the invention have a reflectivity of 15% or less at a wavelength of 790 nm, and also reflect infrared rays.

In an infrared light reflection plate 10 illustrated in Fig. 1, the central wavelength $\lambda_{14}$ of the selective reflection

by the light reflection layers 14a and 14b is in a range of 1190 nm to 1290 nm, the central wavelength $\lambda_{16}$ of the selective reflection by the light reflection layers 16a and 16b is in a range of 1010 nm to 1070 nm, and the central wavelength $\lambda_{18}$ of the selective reflection by the light reflection layer 18 is in a range of 850 nm to 900 nm. In the invention, the infrared ray reflection efficiency is improved by using five light reflection layers in which the selective reflection wavelengths are in the above respective ranges. As a result, compared with an infrared light reflection plate having the same configuration, heat shielding properties are further improved. As illustrated in Fig. 9, the spectrum distribution of the solar light energy intensity exhibits a general tendency in which the energy increases as the wavelength becomes shorter; however, in the spectrum distribution of the infrared light wavelength area, two energy intensity peaks are present at a wavelength of 950 nm to 1130 nm and a wavelength of 1130 nm to 1350 nm. As a result of thorough studies, the inventors found that, when at least a set of light reflection layers having a central wavelength of the selective reflection in a range of 1010 nm to 1070 nm (more preferably 1020 nm to 1060 nm) and at least a set of light reflection layers having a central wavelength of the selective reflection in a range of 1190 nm to 1290 nm (more preferably 1200 nm to 1280 nm) are used, it is possible to more efficiently reflect light corresponding to the two peaks, and, consequently, it is possible to further improve heat shielding properties.

In addition, in a wavelength range of 950 nm or less, it is observed that heat shielding properties improve to a certain extent when a reflection wavelength band is near a short wavelength, but there is a problem in that reflected light is colored when the reflection wavelength band is in the visible light range. In the invention, the color of reflected light is suppressed by setting the location of the short wavelength-side reflection wavelength to 790 nm or more (in detail, the reflectivity at a wavelength of 790 nm is suppressed to 15% or less) in consideration of observation at a slant (the case of up to approximately 60° slanted from the normal direction is assumed as a general observation condition) . In the infrared light reflection layer laminate and the infrared light reflection plate of the invention, the reflectivity at a wavelength of 790 nm is preferably 10% or less, and more preferably 8% or less.

Furthermore, in the infrared light reflection layer laminate and the infrared light reflection plate of the invention, the reflectivity at a wavelength of 800 nm is preferably in a range of 15% to 50% since the change in the colors of the infrared light reflection layer laminate and the infrared light reflection plate of the invention is suppressed, more preferably in a range of 20% to 50%, and particularly preferably in a range of 30% to 50%.

In order not only to suppress the color of reflected light but also to improve heat shielding performance, the central wavelength $\lambda_{18}$ of the selective reflection of the light reflection layer 18 is preferably in a range of 850 nm to 900 nm (more preferably in a range of 850 nm to 880 nm).

The spiral pitch of the cholesteric liquid crystalline phase at which the reflection central wavelength is exhibited is, in general, approximately 760 nm to 840 nm at the wavelength of $\lambda_{14}$, approximately 650 nm to 690 nm at the wavelength of $\lambda_{16}$ and approximately 550 nm to 580 nm at the wavelength of $\lambda_{18}$.

In addition, the thicknesses of the respective light reflection layers are approximately 1 $\mu$m to 8 $\mu$m (preferably 3 $\mu$m to 7 $\mu$m). However, the thicknesses are not limited to the above range. The light reflection layer having a desired spiral pitch can be formed by adjusting the type, concentration and the like of a material that is used to form the layer (mainly a liquid crystalline material and a chiral agent). In addition, it is possible to set the thickness of the layer in a desired range by adjusting the coating amount.

As described above, in the adjoining light reflection layers 14a and 14b, the spiral directions of the respective cholesteric liquid crystalline phases are mutually opposite, and, similarly, in the adjoining light reflection layers 16a and 16b, the spiral directions of the respective cholesteric liquid crystalline phases are mutually opposite. As such, when light reflection layers which are made of oppositely-oriented cholesteric liquid crystalline phases and have substantially equal central wavelengths of selective reflection are closely disposed, it is possible to reflect both left circularly polarized light and right circularly polarized light having the same wavelength. This action has no relationship with the optical characteristics of the substrate 12, and can be obtained without being influenced by the optical characteristics of the substrate 12.

For example, in a case in which the central wavelength of selective reflection is not $\lambda_{16}$ so that light that has passed through the light reflection layer 16b (light in which right circularly polarized light having the wavelength of $\lambda_{16}$ has been reflected and only left circularly polarized light has transmitted through) subsequently passes through 14a or 14b instead of 16b, a left circularly polarized light component having the wavelength of $\lambda_{16}$ passes through cholesteric liquid crystalline layers having different sizes of spiral pitches. In this case, the left circularly polarized light component having the wavelength of $\lambda_{16}$ is slightly influenced by the optical rotations of cholesteric liquid crystalline phases in other light reflection layers, and therefore a change, such as a shift of the wavelength of the left circularly polarized light component, is caused. It is needless to say that this phenomenon is a change occurring not only with "the left circularly polarized light component having the wavelength of $\lambda_{16}$" but in a case in which certain circularly polarized light having a certain wavelength passes through cholesteric liquid crystalline phases having different spiral pitches. As a result of a variety of studies, the inventors found that, although these are empirical data, in a case in which one circularly polarized light component that has not been reflected by a cholesteric liquid crystalline layer having a predetermined spiral pitch passes through another cholesteric liquid crystalline layer having a different spiral pitch without being reflected, when

the number of the layers through which the component passes is 3 or more, an adverse influence on the passing circularly polarized light component becomes significant, and, subsequently, even when the circularly polarized light reaches a cholesteric liquid crystalline layer that can reflect the circularly polarized light, the reflectivity of the layer significantly decreases. In the invention, the effects of the invention can be obtained even when a set of light reflection layers in which the central wavelengths of selective reflection are substantially mutually equal but the spiral directions are mutually different are not adjacently disposed; however, in order to further improve the heat shielding performance, the number of other light reflection layers (light reflection layers which are formed by fixing cholesteric liquid crystalline phases having different spiral pitches and have different central wavelengths of selective reflection) disposed between the set of light reflection layers is preferably 2 or less. Particularly, in order to further improve the heat shielding performance, the set of the light reflection layers 14a and 14b or 16a and 16b having a reflection wavelength band on a long wavelength side preferably adjoin.

On the other hand, in order to adjust the color of reflected light, it is preferable to suppress the improvement of the heat shielding performance, and the light reflection layers 14a and 14b or 16a and 16b preferably do not adjoin respectively.

Meanwhile, in the invention, since two light reflection layers which are formed by fixing cholesteric liquid crystalline phases having mutually opposite optical rotations (that is, right or left optical rotation) and form a pair also maintain a favorable heat shielding performance in a slanting direction in a case in which the light reflection layers adjoin, light reflection layers on a long wavelength side are preferably adjoined. On the other hand, for light reflection layers on a short wavelength side, it is preferable to adjust the color of reflected light by using only one layer without forming a pair or, when two layers are used to form a pair, installing the layers to be not adjacent, and suppressing the reflectivity. That is, it is more preferable that the light reflection layer X1 and the light reflection layer X2 do not adjoin and the light reflection layer X3 and the light reflection layer X4 do not adjoin.

(Aspect in which six light reflection layers are present)

Fig. 2 illustrates a cross-sectional view of an infrared light reflection plate of another embodiment of the invention. An infrared light reflection plate 10' illustrated in Fig. 2 includes the light reflection layer X1 (light reflection layer 14a), the light reflection layer X2 (light reflection layer 14b), the light reflection layer X3 (light reflection layer 16a), the light reflection layer X4 (light reflection layer 16b), the light reflection layer X5 (light reflection layer 18a) and a light reflection layer X6 (hereinafter also referred to as a light reflection layer 18b) on one surface of the substrate 12. Here, in the light reflection layers 18a and 18b, the spiral directions of the respective cholesteric liquid crystalline phases are mutually opposite, and the reflection central wavelengths $\lambda_3$ and $\lambda_3$' are substantially equal (hereinafter, when $\lambda_3$ and $\lambda_3$' are substantially equal, $\lambda_3$ and $\lambda_3$' will also be collectively referred to as $\lambda_{18}$). The light reflection layers 14a and 14b preferably adjoin in order to further improve heat shielding performance. On the other hand, the light reflection layers 18a and 18b preferably have two or more layers disposed therebetween in consideration of installation locations in order to adjust the color of reflected light rather than to improve heat shielding performance. It is preferable that the light reflection layers 16a and 16b be adjoined in a case in which the heat shielding performance is more emphasized as infrared light reflection plates, and be disposed not to be adjoined in a case in which the suppression of the color of reflected light is more emphasized. Among the above, it is more preferable that the light reflection layer X1 and the light reflection layer X2 adjoin and the light reflection layer X5 and the light reflection layer X6 be laminated with at least two light reflection layers therebetween.

Meanwhile, with regard to the preferable aspects of characteristics other than what has been described above, the reflectivity and the heat shielding performance are the same as in the aspect in which five light reflection layers are present in terms of the preferable ranges.

(Other aspects)

The aspect of the cholesteric liquid crystalline layer of the infrared light reflection plate of the invention is not limited to the aspects illustrated in Figs. 1 and 2. The configuration may have 7 or more light reflection layers laminated on one surface of the substrate or may have one or more sets (seven or more layers in total) of light reflection layers laminated on both surfaces of the substrate . In addition, an aspect may have two or more sets of light reflection layers which exhibit substantially equal reflection central wavelengths.

In addition, it is needless to say that the infrared light reflection plate of the invention may be combined with another infrared light reflection plate for the purpose of further widening the band of reflection wavelengths. In addition, the infrared light reflection plate may have a light reflection layer that reflects light having a predetermined wavelength using a principle other than the selective reflection characteristics of a cholesteric liquid crystalline phase. Examples of members that can be combined include the composite film and the respective layers that configure the composite film which are described in JP-T-4-504555, the multilayer laminate described in JP-T-2008-545556 and the like.

In addition, the infrared light reflection plate of the invention may have selective reflection characteristics corresponding to the respective wavelength ranges with respect to infrared light wavelength ranges other than the above two-peak spectrum (for example, 1400 nm to 2500 nm) . For example, when a set of light reflection layers formed by fixing cholesteric liquid crystalline phases, particularly, light reflection layers formed by fixing cholesteric liquid crystalline phases having mutually opposite optical rotations (that is, right or left optical rotation) is further laminated, it is possible to widen the band of the selective reflection wavelength and to further improve the heat shielding performance.

<Materials of the respective layers>

Next, preferable examples of materials and the like used to produce the infrared light reflection plate of the invention will be described in detail.

1. Material for forming the light reflection layer

In the infrared light reflection plate of the invention, a curable liquid crystalline composition is preferably used to form the respective light reflection layers. A preferable example of the liquid crystalline composition contains at least a rod-shaped liquid crystalline compound, an optically active compound (chiral agent) and a polymerization initiator. The liquid crystalline composition may contain two or more types of each of the components. For example, it is possible to jointly use a polymerizable liquid crystalline compound and a non-polymerizable liquid crystalline compound. In addition, it is also possible to jointly use a low-molecular-weight liquid crystalline compound and a macromolecular liquid crystalline compound. Furthermore, in order to improve the uniformity of orientation, coating ability and film strength, the liquid crystalline composition may contain at least one selected from a variety of additives such as a horizontal orientation agent, a variation inhibitor, a cissing inhibitor and polymerizable monomers. In addition, it is possible to further add a polymerization inhibitor, an antioxidant, an ultraviolet absorbent, a light stabilizing agent, a coloring material, metal oxide fine particles and the like as necessary to the liquid crystalline composition as long as the optical performances are not degraded.

(1) Liquid crystalline compound

The liquid crystalline compound that can be used in the invention may be a so-called rod-shaped liquid crystalline compound or a disk-shaped liquid crystalline compound, and is not particularly limited. Among the above, the liquid crystalline compound is preferably a rod-shaped liquid crystalline compound.

An example of the rod-shaped liquid crystalline compound that can be used in the invention is a rod-shaped nematic liquid crystalline compound. Examples of the rod-shaped nematic liquid crystalline compound that can be preferably used include azomethines, azoxys, cyanobiphenyls, cyanophenyl esters, bezoic acid esters, cyclohexane carboxylic acid phenyl esters, cyanophenyl cyclohexanes, cyano-substituted phenylpyrimidines, alkoxy-substituted phenylpyrimidines, phenyldioxanes, tolans and alkenyl cyclohexyl benzonitriles. It is possible to use not only a low-molecular-weight liquid crystalline compound but also a macromolecular liquid crystalline compound.

The rod-shaped liquid crystalline compound used in the invention may be polymerizable or non-polymerizable. A variety of documents (for example, Y. Goto et. al., Mol. Cryst. Liq. Cryst. 1995, Vol. 260, pp. 23-28) describe a rod-shaped liquid crystalline compound having no polymerizable group.

The polymerizable rod-shaped liquid crystalline compound can be obtained by introducing a polymerizable group into the rod-shaped liquid crystalline compound. Examples of the polymerizable group include unsaturated polymerizable groups, epoxy groups and aziridinyl groups, and the polymerizable group is preferably an unsaturated polymerizable group and particularly preferably an ethylenic unsaturated polymerizable group. The polymerizable group can be introduced into the molecules of the rod-shaped liquid crystalline compound by a variety of methods. The number of the polymerizable groups included in the polymerizable rod-shaped liquid crystalline compound is preferably 1 to 6 and more preferably 1 to 3. Examples of the polymerizable rod-shaped liquid crystalline compound include compounds described in Makromol. Chem., Vol. 190. pp. 2255 (1989), Advanced Materials Vol. 5, pp. 107 (1993), the specification of U.S. Patent No. 4683327, the specification of U.S. Patent No. 5622648, the specification of U.S. Patent No. 5770107, International Publication No. WO95/22586, International Publication No. WO95/24455, International Publication No. WO97/00600, International Publication No. WO98/23580, International Publication No. WO98/52905, JP-A-1-272551, JP-A-6-16616, JP-A-7-110469, JP-A-11-80081, JP-A-2001-328973 and the like. Two or more polymerizable rod-shaped liquid crystalline compounds may be jointly used. When two or more polymerizable rod-shaped liquid crystalline compounds are jointly used, it is possible to decrease the orientation temperature.

(2) Optically active compound (chiral agent)

The liquid crystalline composition exhibits a cholesteric liquid crystalline phase, and, in order to do so, the liquid crystalline composition preferably contains an optically active compound. However, in a case in which the rod-shaped liquid crystalline compound is a molecule having an asymmetric carbon atom, there is a case in which a cholesteric liquid crystalline phase can be stably formed without adding the optically active compound. The optically active compound can be selected from a variety of well-known chiral agents (described in, for example, Paragraph 4-3, Chapter 3, Liquid Crystalline Device Handbook; pp. 199, Chiral Agents for TN and STN; Japan Society for the Promotion of Science - 142(C) committee (1989)). The optically active compound generally includes an asymmetric carbon atom, but an axial asymmetric compound or a planar asymmetric compound including no asymmetric carbon atom can be also used as the chiral agent. Examples of the axial asymmetric compound or the planar asymmetric compound include binaphthyl, helicene, paracyclophane and derivatives thereof. The optically active compound (chiral agent) may include a polymerizable group. In a case in which the optically active compound includes a polymerizable group and the rod-shaped liquid crystalline compound that is jointly used with the optically active compound also includes a polymerizable group, it is possible to form a polymer having a repeating unit derived from the rod-shaped liquid crystalline compound and a repeating unit derived from the optically active compound using a polymerization reaction between the polymerizable optically active compound and the polymerizable rod-shaped liquid crystalline compound. In this aspect, the polymerizable group included in the polymerizable optically active compound is preferably the same group as the polymerizable group included in the polymerizable rod-shaped liquid crystalline compound. Therefore, the polymerizable group of the optically active compound is also preferably an unsaturated polymerizable group, an epoxy group or an aziridinyl group, more preferably an unsaturated polymerizable group, and particularly preferably an ethylenic unsaturated polymerizable group.

In addition, the optically active compound may be a liquid crystalline compound.

There is preferably 1 mol% to 30 mol% with respect to the liquid crystalline compound being jointly used of the optically active compound in the liquid crystalline composition. The use amount of the optically active compound is preferably smaller since there are more cases in which the liquid crystallinity is not influenced. Therefore, the optically active compound being used as the chiral agent is preferably a compound having a strong torsion so that a desired torsional orientation of the spiral pitch can also be achieved in a small amount. Examples of the above chiral agent that exhibits a strong torsion include the chiral agent described in JP-A-2003-287623, which can be preferably used in the invention.

(3) Polymerization initiator.

The liquid crystalline composition used to form the light reflection layer is preferably a polymerizable liquid crystalline composition, and, in order to do so, the liquid crystalline composition preferably contains a polymerization initiator. In the invention, since a curing reaction is made to proceed using the radiation of ultraviolet rays, a polymerization initiator being used is preferably a photopolymerization initiator that can initiate a polymerization reaction using the radiation of ultraviolet rays. Examples of the photopolymerization initiator include $\alpha$-carbonyl compounds (described in the specifications of U.S. Patent No. 2367661 and U.S. Patent No. 2367670), acyloin ether (described in the specification of U.S. Patent No. 2448828), $\alpha$-hydrocarbon-substituted aromatic acyloin compounds (described in the specification of U.S. Patent No. 2722512), polynuclear quinone compounds (described in the specifications of U.S. Patent No. 3046127 and U.S. Patent No. 2951758), a combination of triarylimidazole dimer and p-aminophenyl ketone (described in the specification of U.S. Patent No. 3549367), acridine and phenazine compounds (described in the specifications of JP-A-60-105667 and U.S. Patent No. 4239850), oxadiazole compounds (described in the specification of U.S. Patent No. 4212970) and the like.

The use amount of the photopolymerization initiator is preferably 0.1 mass% to 20 mass% of the liquid crystalline composition (solid content in the case of a coating fluid), and more preferably 1 mass% to 8 mass%.

(4) Orientation controlling agent

An orientation controlling agent that contributes to the stable and fast formation of the cholesteric liquid crystalline phase may be added to the liquid crystalline composition. Examples of the orientation controlling agent include fluorine-containing (meth)acrylate-based polymers and compounds represented by the following formulae (X1) to (X3) . The liquid crystalline composition may contain two or more selected from the above. The above compounds can reduce or substantially horizontally orient the tilt angle of the molecules of the liquid crystalline compound in the interface of the layer with the air. Further, in the specification, "horizontal orientation" refers to the long axes of liquid crystalline molecules and the film surface being parallel, but the horizontal orientation does not require the long axes of liquid crystalline molecules and the film surface to be strictly parallel, and, in the specification, means an orientation in which the inclination angle from the horizontal surface is less than 20 degrees. In a case in which the liquid crystalline compound is horizontally

oriented in the vicinity of the interface with the air, orientation defects are not easily caused, and therefore the transparency in the visible light range is enhanced, and the reflectivity in the infrared range increases. On the other hand, when the molecules of the liquid crystalline compound are oriented at a large tilt angle, since the spiral axis of the cholesteric liquid crystalline phase deviates from the film surface normal line, the reflectivity decreases or a finger print pattern is caused, and haze increases or diffraction properties appear, which are not preferable.

Examples of the fluorine-containing (meth)acrylate-based polymers that can be used as the orientation controlling agent are described in [0018] to [0043] and the like in JP-A-2007-272185.

Hereinafter, the following formulae (X1) to (X3) that can be used as the orientation controlling agent will be sequentially described.

[Chem. 1]

(X 1)

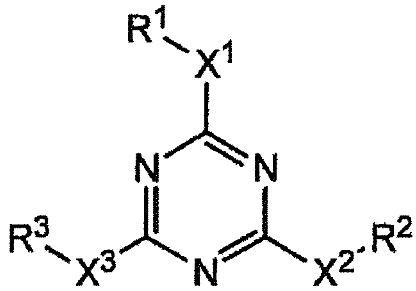

In the formula, each of $R^1$, $R^2$ and $R^3$ independently represents a hydrogen atom or a substituent, and $X^1$, $X^2$ and $X^3$ represent a single bond or divalent linking group. The substituents respectively represented by $R^1$ to $R^3$ are preferably substituted or unsubstituted alkyl groups (among the alkyl groups, an unsubstituted alkyl group or a fluorine-substituted alkyl group is more preferable), aryl groups (among the aryl groups, an aryl group having a fluorine-substituted alkyl group is preferable), substituted or unsubstituted amino groups, alkoxy groups, alkylthio groups, or a halogen atom. The divalent linking groups respectively represented by $X^1$, $X^2$ and $X^3$ are preferably alkylene groups, alkenylene groups, divalent aromatic groups, divalent hetero ring residues or divalent linking groups selected from a group consisting of -CO-, -NRa-(Ra is an alkyl group having 1 to 5 carbon atoms or a hydrogen atom), -O-, -S-, -SO-, $-SO_2-$ and a combination thereof. The divalent linking group is more preferably an alkylene group, a phenylene group, a divalent linking group selected from a group consisting of -CO-, -NRa-, -O-, -S-, and $-SO_2-$ or a divalent linking group that is a combination of at least two groups selected from the above group. The number of carbon atoms in the alkylene group is preferably 1 to 12. The number of carbon atoms in the alkenylene group is preferably 2 to 12. The number of carbon atoms in the divalent aromatic group is preferably 6 to 10.

[Chem. 2]

(X 2)

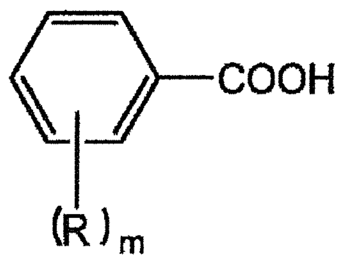

In the formula, R represents a substituent, and m represents an integer of 0 to 5. In a case in which m represents an integer of 2 or more, a plurality of Rs may be equal or different. A preferable substituent as R is the same as the substituents included in the preferable range of the substituent represented by $R^1$, $R^2$ and $R^3$. m preferably represents an integer of 1 to 3, and particularly preferably 2 or 3.

[Chem. 3]

(X3)

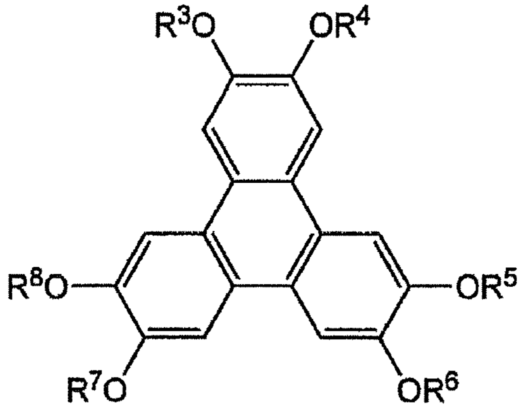

In the formula, each of $R^4$, $R^5$, $R^6$, $R^7$, $R^8$ and $R^9$ independently represents a hydrogen atom or a substituent. The substituents respectively represented by $R^4$, $R^5$, $R^6$, $R^7$, $R^8$ and $R^9$ are preferably the same as the substituents exemplified as the preferable substituents represented by $R^1$, $R^2$ and $R^3$ in the formula (XI).

Examples of the compounds represented by the formula (X1) to (X3) which can be used as the orientation controlling agent in the invention include compounds described in JP-A-2005-99248.

Meanwhile, in the invention, as the orientation controlling agent, one of the compounds represented by the formulae (X1) to (X3) may be solely used, or two or more may be jointly used.

The amount of the compound represented by any one of the formulae (X1) to (X3) added to the liquid crystalline composition is preferably 0.01 mass% to 10 mass%, more preferably 0.01 mass% to 5 mass%, and particularly preferably 0.02 mass% to 1 mass% of the mass of the liquid crystalline compound.

2. Substrate

The infrared light reflection plate of the invention includes a substrate. However, the infrared light reflection plate of the invention may be used as the infrared light reflection layer laminate of the invention including no substrate depending on the use aspect thereof.

The substrate is self-supportive, and when the substrate supports the light reflection layer, there is no limitation in materials and optical characteristics. Depending on the use, the substrate needs to be highly transparent with respect to ultraviolet light.

The substrate (the substrate 12 in Fig. 1, 2 or the like) is, for example, a polymer film, and has no particular limitation in the optical characteristics. In the infrared light reflection plate of the invention, the substrate is preferably a polymer film. In the invention, a member that varies in the in-plane retardation Re may be used as the substrate. This is what is different from the related art in which a λ/2 plate is used as the substrate and the optical characteristics are actively used to improve the light reflection characteristics. However, a wave plate for which the phase difference is accurately adjusted, such as the λ/2 plate, still can be used as the substrate 12.

Specifically, the optical characteristics of the substrate 12 are not particularly limited, and the substrate may be a wave plate exhibiting a phase difference or an optically isotropic substrate. That is, the substrate 12 does not need to be a wave plate whose optical characteristics are strictly adjusted, such as the λ/2 plate. In the invention, the substrate may be formed of a polymer film or the like in which the variation of the in-plane retardation Re (1000) of the substrate 12 at a wavelength of 1000 nm is 20 nm or more. Furthermore, the substrate may be formed of a polymer film or the like in which the variation of Re (1000) is 100 nm or more. In addition, there is no particular limitation in the in-plane retardation of the substrate, and it is possible to use, for example, a wave plate or the like in which the in-plane retardation Re (1000) at a wavelength of 1000 nm is 800 nm to 13000 nm.

The substrate may be a special wave plate manufactured by controlling production steps so as to satisfy predetermined optical characteristics, such as the λ/2 plate, or a polymer film or the like that cannot be used as a predetermined wave plate.

Examples of polymer films that are highly transparent with respect to visible light include a variety of polymer films for optical films which are used as a member of a display apparatus, such as a liquid crystal display apparatus. Examples of the substrate include polyester films such as polyethylene terephthalate (PET), polybutylene terephthalate and polyethylene naphthalate (PEN); polycarbonate (PC) films, polymethyl methacrylate films; polyolefin films such as

polyethylene and polypropylene; polyimide films, triacetyl cellulose (TAC) films and the like. Polyethylene terephthalate and triacetyl cellulose are preferable.

3. Non-light reflecting layer

In addition, the infrared light reflection plate of the invention may include a non-light reflecting layer including an organic material and/or an inorganic material. An example of the non-light reflecting layer that can be used in the invention includes a highly adhesive layer for easing the adhesion to other members (for example, an interlayer sheet and the like). The highly adhesive layer is preferably disposed as an outermost layer on one surface or both surfaces. For example, in an aspect in which at least five light reflection layers are disposed on one surface of the substrate, it is possible to dispose the highly adhesive layer on the light reflection layer on the top layer. And/alternately, it is also possible to dispose the highly adhesive layer on the rear surface (the surface of the substrate on which the light reflection layer is not disposed) of the substrate. The material used to form the highly adhesive layer is selected from a variety of materials depending on whether the highly adhesive layer is formed adjacently to the light reflection layer or formed adjacently to the substrate, the materials of other members to be adhered, and the like. In addition, another example of the non-light reflecting layer that can be used in the invention includes a basecoat layer that enhances the adhesive force between a light reflection layer of a cholesteric liquid crystalline phase and the substrate and an orientation layer which is used when forming the light reflection layer and more precisely regulates the orientation direction of the liquid crystalline compound. The basecoat layer and the orientation layer are preferably disposed between at least one of the light reflection layers and the substrate. In addition, the orientation layer may be disposed between the light reflection layers.

(Highly adhesive layer)

The infrared light reflector of the invention may include the highly adhesive layer on one surface or both surfaces as an outermost layer. The highly adhesive layer has, for example, a function of improving the adhesion to, for example, the interlayer for laminated glass. More specifically, the highly adhesive layer has a function of improving the adhesion between the light reflection layer of a cholesteric liquid crystalline phase and/or the substrate and the interlayer for laminated glass. A polyvinyl butyral (PVB) resin can be used to form the highly adhesive layer. The polyvinyl butyral resin is a polyvinyl acetal generated by reacting polyvinyl alcohol (PVA) and butyl aldehyde using an acid catalyst, and a resin having a repeating unit with the following structure.

[Chem. 4]

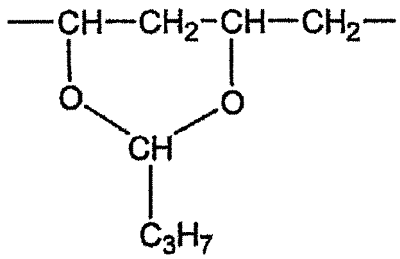

The highly adhesive layer is preferably formed through coating. For example, the highly adhesive layer may be formed on the surface of the light reflection layer of a cholesteric liquid crystalline phase and/or the rear surface (the surface on which the light reflection layer is not formed) of the substrate through coating. More specifically, a polyvinyl butyral resin is dissolved in an organic solvent so as to prepare a coating fluid, the coating fluid is coated on the surface of the light reflection layer of a cholesteric liquid crystalline phase and/or the rear surface of the substrate, and heated and dried as desired, whereby the highly adhesive layer can be formed. Examples of the solvent used to prepare the coating fluid include methoxy-propyl acetate (PGMEA), methyl ethyl ketone (MEK), isopropanol (IPA) and the like. A variety of well-known methods of the related art can be used as the coating method. While the preferable range varies depending on the material used to prepare the coating fluid, the temperature during the drying is, in general, preferably approximately, 140°C to 160°C. The drying time is not particularly limited, and, in general, approximately 5 minutes to 10 minutes.

In addition, the highly adhesive layer may be a layer formed of an acryl resin, a styrene/acryl resin, a urethane resin, a polyester resin and the like which is a so-called undercoat layer. The highly adhesive layer formed of the above materials can be also formed through coating. Meanwhile, among commercially available polymer films, there are polymer films provided with an undercoat layer, and therefore those commercially available products can be also used as the

substrate.

Meanwhile, the thickness of the highly adhesive layer is preferably 0.1 μm to 2.0 μm.

(Basecoat layer)

The infrared light reflector of the invention may include a basecoat layer between the light reflection layer of a cholesteric liquid crystalline phase and the substrate. When the adhesive force between the light reflection layer of a cholesteric liquid crystalline phase and the substrate is weak, the light reflection layer of a cholesteric liquid crystalline phase and the substrate may become likely to peel in a step of manufacturing the infrared light reflector by laminating the light reflection layer of a cholesteric liquid crystalline phase, or the strength (impact resistance) may decrease when laminated glass is used as the infrared light reflection plate. Therefore, it is possible to use a layer that can improve the adhesion between the cholesteric liquid crystalline layer and the substrate as the basecoat layer. Meanwhile, in a case in which members of the interlayer sheet and the like and the light reflection layer are integrated by peeling off the substrate or the substrate and the basecoat layer, the adhesion needs to be weak in the interface between the substrate and the basecoat layer or the basecoat layer and the light reflection layer of a cholesteric liquid crystalline phase so that the substrate and the basecoat layer or the basecoat layer and the light reflection layer of a cholesteric liquid crystalline phase can peel. When it is considered that the laminated interlayer sheet is produced in the subsequent steps, the basecoat layer and the substrate preferably peel in the interface between the basecoat layer and the substrate.

Examples of materials that can be used to form the basecoat layer include acrylic acid ester copolymers, polyvinylidene chloride, styrene butadiene rubber (SBR), aqueous polyesters and the like. In addition, in an aspect in which the surface of the basecoat layer is adhered to the interlayer, the adhesion between the basecoat layer and the interlayer is preferably favorable, and the basecoat layer preferably contains a polyvinyl butyral resin as well as the above materials from the viewpoint of having a favorable adhesion. In addition, since it is necessary to appropriately adjust the adhesion as described above, the basecoat layer is preferably hardened appropriately using a hardener such as a dialdehyde, such as glutaraldehyde or 2, 3-dihydroxy-1, 4-dioxane, or boric acid. The addition amount of the hardener is preferably 0.2 mass% to 3.0 mass% of the dried mass of the basecoat layer.

The thickness of the basecoat layer is preferably 0.05 μm to 0.5 μm.

(Orientation layer)

The infrared light reflector of the invention may also include an orientation layer between the light reflection layer of a cholesteric liquid crystalline phase and the substrate. The orientation layer has a function of more precisely regulating the orientation direction of the liquid crystalline compound in the cholesteric liquid crystalline layer. The orientation layer can be provided using means such as a rubbing treatment of an organic compound (preferably a polymer), oblique evaporation of an inorganic compound, formation of a layer having a microgroove or the like. Furthermore, orientation layers in which an orientation function is generated by supply of an electric field, supply of a magnetic field or radiation of light are also known. The orientation layer is preferably formed on the surface of a polymer film through a rubbing treatment.

Since the orientation layer needs to be adjacent to the light reflection layer of a cholesteric liquid crystalline phase, the orientation layer is preferably provided between the light reflection layer of a cholesteric liquid crystalline phase and the substrate or the basecoat layer. The basecoat layer may have the functions of the orientation layer. In addition, the orientation layer may be provided between the light reflection layers.

The orientation layer preferably has a certain degree of adhesive force with respect to any of the light reflection layer of a cholesteric liquid crystalline phase and the basecoat layer or the substrate which are adjacent to the orientation layer. However, in a case in which the laminated interlayer sheet is produced while the substrate is peeled from the light reflection layer of a cholesteric liquid crystalline phase, which is an example of the embodiment of the invention to be described later, the adhesive force needs to be weak in any interface among the light reflection layer of a cholesteric liquid crystalline phase/ the orientation layer/ the basecoat layer/ the substrate so that the orientation layer can be peeled off. The orientation layer may be peeled off in any interface; however, when it is considered that the laminated interlayer sheet is produced in the subsequent steps, the orientation layer is preferably peeled off in the interface between the orientation layer and the basecoat layer.

The material used as the orientation layer is preferably a polymer of an organic compound, and a crosslinkable polymer or a polymer that is crosslinked using a crosslinking agent is frequently used. Needless to say, a polymer having both functions also can be used. Examples of the polymer include polymers, such as polymethyl methacrylate, acrylic acid/methacrylic acid copolymers, styrene/malein imide copolymers, polyvinyl alcohols and denatured polyvinyl alcohols, poly(N-methylol acrylamide), styrene/vinyl toluene copolymers, polyethylene chlorosulfonate, nitrocellulose, polyvinyl chloride, chlorinated polyolefin, polyesters, polyimides, vinyl acetate/vinyl chloride copolymers, ethylene/vinyl acetate copolymers, carboxymethyl cellulose, gelatin, polyethylene, polypropylene and polycarbonate, and compounds, such

as a silane coupling agent. An example of the preferable polymer is an aqueous polymer, such as poly (N-methylol acrylamide), carboxymethyl cellulose, gelatin, polyvinyl alcohols or denatured polyvinyl alcohol, gelatin, polyvinyl alcohol and denatured polyvinyl alcohol are more preferable, and polyvinyl alcohol and denatured polyvinyl alcohol are particularly preferable. In addition, in an aspect in which the surface of the orientation layer is adhered to the interlayer, the adhesion between the orientation layer and the interlayer is preferably favorable, and the orientation layer preferably contains a polyvinyl butyral resin as well as the above materials from the viewpoint of having a favorable adhesion.

The thickness of the orientation layer is preferably 0.1 μm to 2.0 μm.

4. Additives

In addition, the heat shielding effects of the infrared light reflection layer laminate and the infrared light reflector of the invention can be improved using the light absorption characteristics of the material as well as the reflection characteristics. The infrared light reflection layer laminate and the infrared light reflector of the invention may also include additives in an arbitrary layer.

For example, when a coloring material exhibiting absorption characteristics in a near infrared light range, preferably a wavelength range of approximately 780 nm to 940 nm is added to the substrate or at least one light reflection layer, or a layer including the coloring material is separately disposed, light in the infrared range is absorbed, and heat shielding properties can also be improved.

In addition, the metal oxide fine particles also include a material having absorption characteristics and/or reflection characteristics in the infrared range, specifically, 1400 nm to 2500 nm. In the invention, metal oxide fine particles exhibiting the above properties can also be used, and, for example, when the metal oxide fine particles are added to the substrate or at least one light reflection layer, or a layer including the metal oxide fine particles is separately disposed, light in a wavelength range of approximately 1400 nm to 2500 nm is absorbed and/or reflected, and heat shielding properties can also be improved.

As such, an aspect in which heat shielding properties are improved using the coloring material and/or the metal oxide fine particles is more preferable than further laminating the light reflection layer to which a cholesteric liquid crystalline phase has been fixed, thereby widening the band, from the standpoint of manufacturing ability and manufacturing costs.

In addition, it was found by studies by the inventors that the respective light reflection layers formed by fixing a cholesteric liquid crystalline phase tend to deteriorate due to the radiation of ultraviolet light, and the respective light reflection layers significantly deteriorate particularly due to the radiation of ultraviolet light having a wavelength of 380 nm or less. Therefore, in the invention, for example, when a material that absorbs light in the above wavelength range (ultraviolet absorbent) is added to the substrate or at least one light reflection layer, or a layer containing the material is separately disposed, it is possible to significantly suppress the deterioration of the respective light reflection layers, which is preferable.

Meanwhile, since there are cases in which the coloring material, the metal oxide fine particles, the ultraviolet absorbent and the like have influences on the orientation of liquid crystals, in a case in which the above materials are added to layers other than the substrate or the light reflection layers or the light reflection layers are integrated with other members, the materials are preferably added to the members. The materials may be added to the same layer, or respectively added to mutually different layers. Members (layers, the substrate and the like) to which the respective materials are added are determined so that the effects by the functions of the respective materials can be more efficiently obtained. In addition, members to which the respective materials are added are determined so that surface state defects and the like are not caused and the transparency does not significantly degrade in consideration of a variety of properties (influence on haze, solubility, fusibility, coating properties and fusibility) of the materials.

For example, the ultraviolet absorbent is preferably added to a member which light enters earlier than the light reflection layers. When the ultraviolet absorbent is added to the members, it is possible to suppress the light reflection layer being deteriorated by ultraviolet rays.

In addition, the coloring material or metal oxide fine particles are preferably added to a member which light enters later than the light reflection layers.

While not illustrated in the drawings, in the aspect of the invention, the additives such as the ultraviolet absorbent, the coloring material and the metal oxide fine particles may be included in any layer in the infrared light reflection layer laminate and the infrared light reflector of the invention. Among the above layers, the additives are preferably included in the substrate or the non-light reflecting layer, and, for example, preferably included in any one of the highly adhesive layer, the orientation layer, the basecoat layer and the substrate. A layer to which the additives are added is selected depending on the location relationship between the light reflection layer of a cholesteric liquid crystalline phase and solar light. The ultraviolet absorbent is preferably included in a layer closer to solar light than the light reflection layers of a cholesteric liquid crystalline phase, and the coloring material and the metal oxide fine particles are preferably included in a layer farther from solar light than the light reflection layers of a cholesteric liquid crystalline phase. Since a preferable

layer to respectively contain the ultraviolet absorbent, the coloring material and the metal oxide fine particles is replaced by the embodiment, it is necessary to appropriately adjust the compositions, solvents, use amounts and the like for the respective materials and to employ a method for containing the materials which is considered to be most appropriate.

(Ultraviolet absorbent)

The infrared light reflector of the invention preferably contains the ultraviolet absorbent in at least one of the light reflection layers, the highly adhesive layer, the basecoat layer, the orientation layer and the substrate. Since some types of the ultraviolet absorbent have an influence on the orientation of liquid crystals, the ultraviolet absorbent is preferably added to members (layers, the substrate and the like) other than the light reflection layers. The embodiment of the invention can employ a variety of forms, and the ultraviolet absorbent is preferably added to a member which light enters earlier than the light reflection layers. For example, the ultraviolet absorbent is preferably added to a layer disposed between a glass plate disposed on an outdoor side and the light reflection layers of a cholesteric liquid crystalline phase. Alternatively, the ultraviolet absorbent is also preferably included in the interlayer film adhered to the glass plate disposed on the outdoor side or the glass plate itself disposed on the outdoor side.

Examples of compounds that can be used as the ultraviolet absorbent include benzotriazole-based ultraviolet absorbents, benzodithiol-based ultraviolet absorbents, coumarin-based ultraviolet absorbents, benzophenone-based ultraviolet absorbents, salicylic acid ester-based ultraviolet absorbents, cyanoacrylate-based ultraviolet absorbents and other ultraviolet absorbents; titanium oxide, zinc oxide and the like. Particularly preferable examples of the ultraviolet absorbent include Tinuvin 326, 328, 479 (all manufactured by Ciba Japan K.K.) and the like. In addition, the type and blending amount of the ultraviolet absorbent are not particularly limited, and can be appropriately selected depending on purpose. In particular, when a member containing the ultraviolet absorbent has an action of producing an ultraviolet ray transmittance of 0.1% or less at a wavelength of 380 nm or less, the deterioration of the light reflection layer can be significantly reduced, and a change in the color to yellow by ultraviolet rays can be significantly reduced, which is preferable. Therefore, the type and blending amount of the ultraviolet absorbent are preferably determined so as to satisfy the characteristics.

(Coloring material)

The infrared light reflector of the invention preferably contains a coloring material in at least one of the light reflection layers, the highly adhesive layer, the basecoat layer, the orientation layer, and the substrate. Since the orientation of liquid crystals is influenced depending on the type of the coloring material, the coloring material is preferably added to members (layers, the substrate and the like) other than the light reflection layers. Meanwhile, there are cases in which the efficiency of infrared light reflection in the light reflection layers of a cholesteric liquid crystalline phase is decreased due to diffraction, absorption and the like caused when light transmits through the member that contains the coloring material such that the heat shielding performance degrades. Therefore, the embodiment of the invention can employ a variety of forms, and the coloring material is preferably added to a member which light enters later than the light reflection layers. More specifically, the coloring material is preferably included in a layer disposed between a glass plate disposed on an indoor side and the light reflection layers of a cholesteric liquid crystalline phase. Alternatively, the coloring material is also preferably included in the interlayer film adhered to the glass plate disposed on the indoor side or the glass plate itself disposed on the indoor side.

Any of dyes and pigments can be used as the coloring material. Particularly, when a material exhibiting absorbent material characteristics with respect to a wavelength range of 780 nm to 940 nm is used, the heat shielding properties can be further improved, which is preferable. In addition, coloring can be reduced, which is preferable. The absorbent material with respect to a wavelength range of 780 nm to 940 nm is preferably a cyan dye or a cyan pigment.

Examples of dyes that are used as the cyan dye include azomethine dyes such as indoaniline dyes and indophenol dyes; polymethine dyes such as cyanine dyes, oxonol dyes and merocyanine dyes; carbonium dyes such as diphenylmethane dyes, triphenylmethane dyes and xanthene dyes; phthalocyanine dyes; anthraquinone dyes; for example, aryl or heteryl azo dyes having a phenol, a naphthol or an aniline as a coupling component, and indigo/thioindigo dyes. The above dyes may be dyes in which some of chromophores are disassociated so as to exhibit cyan for the first time, and, in this case, the counter cation may be an inorganic cation such as an alkali metal or ammonium, or an organic cation such as pyridinium or quaternary ammonium salt. Furthermore, the counter cation may be a polymer cation having the inorganic cation or the organic cation in a partial structure. In addition, it is also possible to use a black dye such as a polyazo dye.

As examples of pigments that are used as the cyan pigment, phthalocyanine pigments, anthraquinone-based indanthrone pigments (for example, C. I. Pigment Blue 60 and the like) and dye lake pigment-based triaryl carbonium pigments are preferable, and, in particular, phthalocyanine pigments (preferable examples include copper phthalocyanines such as C. I. Pigment Blue 15:1, C. I. Pigment Blue 15:2, C. I. Pigment Blue 15:3, C. I. Pigment Blue 15:4 and

C. I. Pigment Blue 15:6, monochloro or low chlorinated copper phthalocyanine, pigments described in European Patent No. 860475 in aluminum phthalocyanine, non-metallic phthalocyanines which are C. I. Pigment Blue 16, and phthalocyanines having a central metal of Zn, Ni or Ti, and, among the above, C. I. Pigment Blue 15:3, C. I. Pigment Blue 15:4 and aluminum phthalocyanine are preferable) are most preferable.

As described above, when the coloring material which is a light absorbing material is used, a bias is caused in the transmittance spectrum in the visible light wavelength range, and there are cases in which transmitted light is colored. Depending on use, the coloring material can be selected so as to obtain a desired color by actively using the above characteristic. Meanwhile, depending on use, there are cases in which the coloring material is not preferable (for example, a windshield glass of a vehicle). As a result of studies, the inventors found that, when an absorbent material exhibiting other absorption characteristics is jointly used with an absorbent material having a maximum absorption wavelength of 780 nm to 940 nm, the color can be adjusted to be neutral. For example, in order to adjust the color of light that has transmitted through the infrared light reflection plate to be neutral, it is preferable to use other coloring materials (a yellow dye, a yellow pigment, a magenta dye, a magenta pigment and the like) together with the cyan dye and/or the cyan pigment. As the coloring materials, well-known materials described in a variety of documents can be used (dyes are described in JP-A-2005-105175 and the like, and pigments are described in JP-A-2009-67956 and the like).

(Metal oxide fine particles)

The infrared light reflector of the invention preferably contains metal oxide fine particles having absorption and/or reflection characteristics in a range of 1400 nm to 2500 nm in at least one of the light reflection layers, the highly adhesive layer, the basecoat layer, the orientation layer, and the substrate. Since the orientation of liquid crystals is influenced depending on the type of the metal oxide fine particles, the metal oxide fine particles are preferably added to members (layers, the substrate and the like) other than the light reflection layers. Meanwhile, there are cases in which the efficiency of infrared light reflection in the light reflection layers of a cholesteric liquid crystalline phase is decreased due to diffraction, absorption and the like caused when light transmits through the member that contains the metal oxide fine particles such that the heat shielding performance degrades. Therefore, the embodiment of the invention can employ a variety of forms, and the metal oxide fine particles are preferably added to a member which light enters later than the light reflection layers. More specifically, the metal oxide fine particles are preferably included in a layer disposed between the glass plate disposed on the indoor side and the light reflection layers of a cholesteric liquid crystalline phase. Alternatively, the metal oxide fine particles are also preferably included in the interlayer film adhered to the glass plate disposed on the indoor side or the glass plate itself disposed on the indoor side.

Examples of the metal oxide fine particles that can be used preferably contain at least one metal oxide selected from Zn, Ge, Ti, Zr, Hf, Si, Sn, Mn, Ga, Mo, In, Sb, Ta, V, Y and Nb or a composite metal oxide formed by combining two or more of the above metals.

Examples of the metal oxide include ZnO, $GeO_2$, $TiO_2$, $ZrO_2$, $HfO_2$, $SiO_2$, $Sn_2O_3$, $Mn_2O_3$, $Ga_2O_3$, $MO_2O_3$, $In_2O_3$, $Sb_2O_3$, $Ta_2O_5$, $V_2O_5$, $Y_2O_3$, $Nb_2O_5$ and the like.

Examples of the composite metal oxide include composite oxides of titanium and zirconium, composite oxides of titanium, zirconia and hafnium, composite oxides of titanium and barium, composite oxides of titanium and silicon, composite oxides of titanium, zirconium and silicon, composite oxides of titanium and tin, composite oxides of titanium, zirconia and tin, and the like.

The method for manufacturing the metal oxide fine particles is not particularly limited, and any well-known method can be used. For example, desired metal oxide fine particles can be obtained by using a metal salt or a metal alkoxide as a raw material and hydrolyzing the raw material in a reaction system that contains water.

In addition, except for the method in which the raw material is hydrolyzed in water, inorganic fine particles may be produced in an organic solvent or an organic solvent in which a thermoplastic resin is dissolved. Examples of the solvent that can be used in the above methods include acetone, 2-butanone, dichloromethane, chloroform, toluene, ethyl acetate, cyclohexanone, anisole and the like. The above solvents may be solely used, or may be used in a mixture of a plurality of types.

<Method for manufacturing the infrared light reflection plate>

The respective light reflection layers in the infrared light reflection plate of the invention can be formed using a variety of methods. An example is a method in which the light reflection layers are formed through coating described below, and, more specifically, a curable liquid crystalline composition that can form a cholesteric liquid crystalline phase is coated on the surface of the substrate, the orientation layer, the light reflection layer or the like, the composition is made into a cholesteric liquid crystalline phase, and then a curing reaction (for example, a polymerization reaction, a crosslinking reaction or the like) is made to proceed, whereby the respective light reflection layers can be cured and formed.

The infrared light reflection plate of the invention is preferably produced using a coating method. An example of the manufacturing method is a manufacturing method including at least

(1) a curable liquid crystalline composition is coated on the surface of the substrate or the like, and made into a state of a cholesteric liquid crystalline phase, and
(2) a curing reaction is made to proceed by radiating ultraviolet rays on the curable liquid crystalline composition, and the cholesteric liquid crystalline phase is fixed, thereby forming a light reflection layer.

When the (1) and (2) steps are repeated 5 times on one surface of the substrate, an infrared light reflection plate having a configuration that is the same configuration as illustrated in Fig. 1 can be produced. In addition, when the (1) and (2) steps are repeated 6 times, an infrared light reflection plate having a configuration that is the same configuration as illustrated in Fig. 2 can be produced.

Meanwhile, the rotation direction of the cholesteric liquid crystalline phase can be adjusted depending on the type of the liquid crystal being used or the type of the chiral agent being added, and the spiral pitch (that is, the central reflection wavelength) can be arbitrarily adjusted depending on the concentration of the material. In addition, it is known that the wavelength in a specific range in which the light reflection film reflects can be shifted due to a variety of causes from the manufacturing method, and it is possible to shift the wavelength using conditions of the temperature, illuminance, radiation time and the like when the cholesteric liquid crystalline phase is fixed in addition to the addition concentrations of the chiral agent and the like.

In the (1) step, first, the curable liquid crystalline composition is coated on the surface of the substrate or the bottom light reflection layer. The curable liquid crystalline composition is preferably prepared as a coating fluid in which a material is dissolved and/or dispersed in a solvent. The coating fluid can be coated using a variety of methods, such as a wire bar coating method, an extrusion coating method, a direct gravure coating method, a reverse gravure coating method and a die coating method. In addition, it is also possible to form a coated film by ejecting the liquid crystalline composition from a nozzle using an ink jet apparatus.

Next, the curable liquid crystalline composition which has been coated on the surface and become the coated film is made into a state of a cholesteric liquid crystalline phase. In an aspect in which the curable liquid crystalline composition is prepared as a coating fluid including a solvent, there is a case in which it is possible to make the curable liquid crystalline composition into a state of a cholesteric liquid crystalline phase by drying the coated film and removing the solvent. In addition, in order to achieve a transition temperature to the cholesteric liquid crystalline phase, the coated film may be heated as desired. For example, when the coated film is temporarily heated to a temperature of an isotropic phase, and then cooled to a cholesteric liquid crystalline phase transition temperature, it is possible to stably make the curable liquid crystalline composition into a state of a cholesteric liquid crystalline phase. The liquid crystalline phase transition temperature of the curable liquid crystalline composition is preferably in a range of 10°C to 250°C, and more preferably in a range of 10°C to 150°C in terms of manufacturing ability and the like. When the liquid crystalline phase transition temperature is lower than 10°C, there is a case in which a cooling step or the like becomes necessary in order to decrease the temperature to a temperature range in which a liquid crystalline phase is exhibited. In addition, when the liquid crystalline phase transition temperature exceeds 200°C, a high temperature is required in order to make the curable liquid crystalline composition into an isotropic liquid state at a higher temperature than the temperature range in which a liquid crystalline phase is temporarily exhibited, and it becomes disadvantageous in terms of the consumption of heat energy, the deformation and modification of the substrate, and the like.

Next, in the (2) step, ultraviolet rays are radiated on the coated film that has been made into the state of a cholesteric liquid crystalline phase so as to make a curing reaction proceed. A light source, such as an ultraviolet lamp, is used for the radiation of ultraviolet rays. In this step, the curing reaction of the liquid crystalline composition is made to proceed by radiating ultraviolet rays, and the cholesteric liquid crystalline phase is fixed, thereby forming the light reflection layer.

The radiation energy amount of the ultraviolet rays is not particularly limited, and, in general, preferably approximately 100 $mJ/cm^2$ to 800 $mJ/cm^2$. In addition, the radiation time of ultraviolet rays on the coated film is not particularly limited, but determined from the viewpoint of both the sufficient strength and productivity of the cured film.

In order to promote the curing reaction, ultraviolet rays may be radiated under heating conditions. In addition, the temperature during the radiation of ultraviolet rays is preferably maintained in a temperature range in which the cholesteric liquid crystalline phase is exhibited so as to prevent the cholesteric liquid crystalline phase from being disarrayed. In addition, since the oxygen concentration of the atmosphere has a relationship with the degree of polymerization, in a case in which a desired degree of polymerization is not achieved in the air and the film strength is not sufficient, the oxygen concentration in the atmosphere is preferably decreased using a method of nitrogen purging or the like. A preferable oxygen concentration is preferably 10% or less, more preferably 7% or less, and most preferably 3% or less. The reaction yield of the curing reaction (for example, a polymerization reaction), which is made to proceed by the radiation of ultraviolet rays, is preferably 70% or more, more preferably 80% or more, and still more preferably

90% or more from the viewpoint of holding the mechanical strength of the layers, suppressing the outflow of unreacted substances from the layers, and the like. In order to improve the reaction yield, a method for increasing the radiation amount of ultraviolet rays being radiated or polymerization in a nitrogen atmosphere or under heating conditions is effective. In addition, it is also possible to use a method in which the composition is temporarily polymerized, and then held in a higher temperature state than the polymerization temperature, thereby further progressing the reaction through a thermopolymerization reaction or a method in which ultraviolet rays are radiated again (in this case, ultraviolet rays should be radiated under conditions in which the conditions of the invention are satisfied). The reaction yield can be measured by comparing the absorption intensities of the infrared vibration spectrum of a reactive group (for example, a polymerizable group) before and after the progress of the reaction.

In the above step, the cholesteric liquid crystalline phase is fixed, thereby forming a light reflection layer. Here, the most typical and preferable aspect of the state of the liquid crystalline phase "being solidified" is a state in which the orientation of a liquid crystalline compound that forms the cholesteric liquid crystalline phase is held. In addition to the above state, specifically, the state of the liquid crystalline phase "being solidified" refers to a state in which the layer is not fluidic, generally, at 0°C to 50°C or in a temperature range of -30°C to 70°C under more severe conditions, and the fixed orientation pattern can be continuously held stably without causing a change in the orientation pattern due to an external field or an external force. In the invention, the orientation state of the cholesteric liquid crystalline phase is fixed using the curing reaction progressed by the radiation of ultraviolet rays.

Meanwhile, in the invention, it is simply required for the optical properties of the cholesteric liquid crystalline phase to be held in the layer, and, ultimately, the liquid crystalline composition in the light reflection layer does not need to exhibit liquid crystallinity. For example, the liquid crystalline composition may lose liquid crystallinity due to an increase in the molecular weight from the curing reaction.

[Laminated interlayer sheet for glass]

The laminated interlayer sheet for glass of the invention includes the infrared light reflection layer laminate of the invention or the infrared light reflection plate of the invention and the interlayer sheet disposed on the outermost layer of at least one of the infrared light reflection layer laminate and the infrared light reflection plate.

(Configuration of the laminated interlayer sheet for glass)

Fig. 3 is a schematic cross-sectional view of an example of the laminated interlayer sheet for laminated glass in which interlayer sheets 22 and 24 are adhered respectively to both surfaces of the infrared light reflection plate of Fig. 1. The interlayer sheet in Fig. 3 can be combined with the laminated glass as it is.

Fig. 4 is an example of the laminated interlayer sheet in a case in which the substrate 12 is peeled from the infrared light reflection plate of Fig. 1. The interlayer sheet in Fig. 4 can be combined with the laminated glass as it is.

Fig. 5 is a schematic cross-sectional view of an example of the laminated interlayer sheet for laminated glass in which the interlayer sheets 22 and 24 are adhered respectively to both surfaces of the infrared light reflection plate of Fig. 2. The interlayer sheet in Fig. 5 can be combined with the laminated glass as it is.

(Characteristics of the laminated interlayer sheet for glass)

The interlayer sheet can be adhered to one and/or both surfaces of the infrared light reflector of the invention. When the interlayer sheet is adhered, it is possible to easily combine the interlayer sheet with laminated glass as the laminated interlayer sheet for laminated glass. When the interlayer sheet is adhered, the interlayer sheet may be adhered with the substrate remaining as it is or peeled off; however, when it is considered that the interlayer sheet is combined with the laminated glass in the subsequent steps, the interlayer sheet is preferably adhered with the substrate peeled off in consideration of the thickness, flexibility and compression resistance.

As the interlayer sheet, an ordinary interlayer sheet that is used to produce laminated glass can be used. Specific examples thereof include a sheet produced using a composition containing a polyvinyl butyral resin or an ethylene and vinyl acetate copolymer as a main raw material.

The thickness of the interlayer sheet is, in general, approximately 380 μm to 760 μm.

[Method for manufacturing the laminated interlayer sheet for laminated glass]

The infrared light reflection plate of the invention can be made into a laminated interlayer sheet for laminated glass sandwiched between the interlayer sheets by adhering both surfaces of the infrared light reflection plate to the interlayer sheets.

The method for manufacturing the laminated interlayer sheet for laminated glass of the invention is a manufacturing method including at least

(1) a first step of adhering a first interlayer sheet to one surface of the infrared light reflection plate, thereby obtaining a first laminate, and
(2) a second step of adhering a second interlayer sheet to a surface on the opposite side to the surface to which the first interlayer sheet of the first laminate has been adhered. The first and second steps may be sequentially carried out, or simultaneously carried out. In addition, after one of the steps is carried out, the infrared light reflection plate is temporarily stored, transported and the like, and then the other step may be carried out.

A well-known adhering method can be used to adhere the interlayer sheet, and a laminate treatment is preferably used. In a case in which a laminate treatment is carried out, it is preferable to carry out the laminate treatment under certain degrees of heating and pressurizing conditions so as to prevent the infrared light reflection plate and the interlayer sheet from peeling after being processed.
In order to stably carry out the lamination, the temperature of the film surface to which the interlayer sheet is adhered is preferably 50°C to 130°C, and more preferably 70°C to 100°C.
The interlayer sheet is preferably pressurized during lamination. The pressurization condition is preferably less than 2.0 kg/cm$^2$, more preferably in a range of 0.5 kg/cm$^2$ to 1.8 kg/cm$^2$, and still more preferably in a range of 0.5 kg/cm$^2$ to 1.5 kg/cm$^2$.
In addition, in the invention, the substrate (or at least the laminate including the substrate) may be peeled off from the infrared light reflection plate at the same time as the lamination, immediately after the lamination or immediately before the lamination. That is, the laminated interlayer sheet obtained after the lamination may not include the substrate. For example, an example of the method for manufacturing the laminated interlayer sheet for laminated glass of the invention is a method for manufacturing a laminated interlayer sheet for laminated glass including
a step of, in the first step, peeling the substrate included in the infrared light reflection plate from the first laminate at the same time as or after a step of adhering the infrared light reflection plate and the first interlayer sheet, and
a step of, in the second step, adhering the second interlayer sheet to the surface from which the substrate of the first laminate has been peeled.
The above method enables the manufacturing of a laminated interlayer sheet for laminated glass including no substrate, and, when the laminated interlayer sheet for laminated glass is used, it is possible to easily produce infrared light-reflective laminated glass including no substrate. In order to stably peel the substrate without damage and the like, the temperature of the substrate when peeling the substrate from the light reflection layer of a cholesteric liquid crystalline phase is preferably 40°C or higher, and more preferably 40°C to 60°C.

[Laminated glass]

The laminated glass of the invention includes two pieces of glass and the laminated interlayer sheet for glass of the invention included between the two pieces of glass.

(Configuration of the laminated glass)

Figs. 6 to 8 illustrate cross-sectional views of the embodiments of the laminated glass of the invention.
Fig. 6 is an example in which glass plates 32 and 34 are adhered to both surfaces of the laminated interlayer sheet for laminated glass illustrated in Fig. 3.
Fig. 7 is an example in which the glass plates 32 and 34 are adhered to both surfaces of the laminated interlayer sheet for laminated glass illustrated in Fig. 4.
Fig. 8 is an example in which the glass plates 32 and 34 are adhered to both surfaces of the laminated interlayer sheet for laminated glass illustrated in Fig. 5.
The laminated interlayer sheet for laminated glass of the invention can be made into laminated glass by being sandwiched between the two glass plates. An ordinary glass plate can be used as the glass plate. In order to improve the heat shielding performance by combining with the infrared light reflection plate of the invention in which a cholesteric liquid crystalline phase is used, it is possible to use heat radiation-absorbing glass absorbing light in the visible light range. The visibility (transmittance) and heat shielding performance as glass can be adjusted by adjusting the absorption in the visible light range. As described in Japanese Patent No. 2544035, Japanese Patent No. 2617223 and the like, when the heat radiation-absorbing glass contains metal oxides of iron, tin, nickel, cobalt, selenium or the like, it is possible to adjust the absorption in the visible light range or the color of transmitted light. For example, in a case in which the glass is used in the windshield glass of a vehicle, it is preferable to enhance the light shielding performance while suppressing absorption in the visible light range and adjusting the color of transmitted light so as to satisfy "the visible light transmittance (standard light source A) of 70% or more" regulated in JIS-R-3211 as laminated glass. The heat

radiation-absorbing glass preferably has a visible light transmittance (standard light source A) in a range of 80% to 95%, and a principle wavelength, which is measured using the standard A light source, in a range of 495 nm to 560 nm.

The thickness of the glass plate is not particularly limited, and a preferable range varies depending on use. For example, for use in the windshield glass (window shield) of a transportation vehicle, in general, a glass plate having a thickness of 2.0 mm to 2.3 mm is preferably used. In addition, for use of heat shielding window materials for buildings, such as houses and tall buildings, in general, a glass plate having a thickness of approximately 40 μm to 300 μm is preferably used. However, the thickness is not limited to the above ranges.

[Method for manufacturing the laminated glass]

The laminated interlayer sheet for laminated glass of the invention can be made into laminated glass by being sandwiched between the two glass plates.

The method for manufacturing laminated glass of the invention includes a step of manufacturing a laminate sandwiched between glass plates by sandwiching the laminated interlayer sheet for laminated glass between two glass plates and a step of pressing the laminate sandwiched between the glass plates under heating.

As a detailed manufacturing method, a well-known method for producing laminated glass can be appropriately used.

Generally, a method is employed in which the laminated interlayer sheet for laminated glass is sandwiched between two glass plates, then, a heating treatment and a pressurizing treatment (the laminated interlayer sheet is rubbed using rubber rollers, or the like) are repeated several times, and, finally, a heating treatment is carried out under pressurizing conditions using an autoclave or the like.

The manufacturing method of the invention includes a step of pressing the laminate sandwiched between the glass plates under heating.

In the manufacturing method of the invention, the laminate sandwiched between the glass plates in which the two interlayers are not in contact with each other is preferably pressed under heating.

The laminate sandwiched between the glass plates and the glass plates are adhered by, for example, preliminarily pressing the laminate and the glass plates under reduced pressure using a vacuum bag or the like at a temperature of 80°C to 120°C for a time of 30 minutes to 60 minutes, and then adhering the laminate and the glass plates in an autoclave under pressurization of 1.0 MPa to 1.5 MPa at a temperature of 120°C to 150°C, thereby forming laminated glass in which the laminate is sandwiched between two pieces of glass. In addition, the laminate and the glass plates may be adhered using an adhesive or the like.

At this time, the time of the heating and pressing under pressurization of 1.0 MPa to 1.5 MPa at a temperature of 120°C to 150°C is preferably 20 minutes to 90 minutes.

The method for air-cooling after the completion of heating and pressing is not particularly limited, and a laminated glass body may be obtained by cooling the laminated glass in the air while appropriately relieving the pressure. In the invention, after the completion of heating and pressing, the temperature is preferably decreased in a state of the pressure being held from the viewpoint of further improving wrinkles or cracking in the obtained laminated glass body. Here, the temperature decrease in a state of the pressure being held refers to a fact that the temperature is decreased so that the pressure in an apparatus at 40°C becomes 75% to 100% of the pressure during heating and pressing from the pressure in the apparatus during heating and pressing (preferably 130°C) . The method for decreasing the temperature in a state of the pressure being held is not particularly limited as long as the pressure when the temperature is decreased to 40°C is in the above range, but is preferably an aspect in which the temperature is decreased with no leakage of pressure from the inside of the apparatus so that the pressure in the pressure apparatus naturally decreases as the temperature decreases or an aspect in which the temperature is decreased with further pressurizing from the outside so that the pressure in the apparatus does not decrease as the temperature decreases. In a case in which the temperature is decreased in a state of the pressure being held, it is preferable to heat and press the laminate and the glass plates at 120°C to 150°C, and then cool the laminate and the glass plates in the air over 1 hour to 5 hours to 40°C.

In the invention, the manufacturing method preferably includes a step of releasing the pressure after the temperature is decreased in a state of the pressure being held. Specifically, after the temperature is decreased in a state of the pressure being held, it is preferable to release the pressure after the temperature in an autoclave reaches 40°C or lower, thereby decreasing the temperature.

Therefore, the method for manufacturing a laminated glass body of the invention preferably includes a step of laminating the first glass, the first interlayer, the infrared ray reflection layers, the second interlayer and the second glass in this order, a step of subsequently heating and pressing the components under pressurization of 1.0 MPa to 1.5 MPa at a temperature of 120°C to 150°C, a step of decreasing the temperature in a state of the pressure being held, and a step of releasing the pressure.

The ranges in which the infrared light reflection layer laminate (or the infrared light reflection plate) and the interlayer are thermally pressed may be a range of the entire area of the glass plate, but may be only the circumferential

edge portion of the glass plate, and thermal pressing at the circumferential edge portion can further suppress the occurrence of wrinkles.

[Member for window]

The infrared light reflection plate of the invention exhibits selective reflection characteristics that have reflection peaks at 850 nm to 900 nm, 1010 nm to 1070 nm and 1190 nm to 1290 nm which correspond to the peaks of solar light energy. A reflection plate having the above characteristics is adhered as a member for shielding solar insolation to windows of buildings, such as houses and office buildings, or vehicles . Alternatively, the infrared light reflection plate of the invention can be provided for use as a member for shielding solar insolation (for example, heat shielding glass and heat shielding film) itself.

Other important performances of the infrared light reflection plate are the transmittance of visible light and haze. It is possible to provide an infrared light reflection plate exhibiting a preferable transmittance of visible light and preferable haze depending on use by adjusting the selection, manufacturing conditions and the like of a material. For example, in an aspect in which the infrared light reflection plate is used in use requiring a high visible light transmittance, it is possible to use an infrared light reflection plate which has a visible light transmittance of 90% or more and has an infrared reflectivity satisfying the above reaction.

The infrared light reflection layer laminate of the invention, the infrared light reflection plate of the invention, the laminated interlayer sheet for glass of the invention and the laminated glass of the invention are preferably used as window members for buildings and vehicles.

[Examples]

Hereinafter, the characteristics of the invention will be more specifically described using examples and comparative examples (meanwhile, the comparative examples are not always well-known related art). Materials, use amounts, fractions, treatment contents, treatment order and the like described in the following examples can be appropriately changed within the scope of the purport of the invention. Therefore, the range of the invention is not supposed to be restrictively interpreted based on specific examples described below.

[Preparation of coating fluids (liquid crystalline compositions)]

Coating fluids (R1) and (L1) having compositions described in the following table were respectively prepared.

[Table 1]

| Table of the composition of the coating fluid (R1) | | |
|---|---|---|
| Material (kind) | Material name (manufacturer) | Prescription amount |
| Rod-shaped liquid crystalline compound | RM-257 (Merck) | 10.000 parts by mass |
| Chiral agent | LC-756 (BASF) | 0.236 parts by mass |
| Polymerization initiator | Irgacure 819 (BASF) | 0.419 parts by mass |
| Orientation controlling agent | Compound 1 described. below | 0.016 parts by mass |
| Solvent | 2-Butanone (Wako Pure Chemical Industries, Ltd.) | 15.652 parts by mass |

[Table 2]

| Table of the composition of the coating fluid (L1) | | |
|---|---|---|
| Material (kind) | Material name (manufacturer) | Prescription amount |
| Rod-shaped liquid crystalline compound | RM-257 (Merck) | 10.000 parts by mass |
| Chiral agent | Compound 2 described below | 0.148 parts by mass |
| Polymerization initiator | Irgacure 819 (BASF) | 0.419 parts by mass |

(continued)

| Table of the composition of the coating fluid (L1) | | |
|---|---|---|
| Material (kind) | Material name (manufacturer) | Prescription amount |
| Orientation controlling agent | Compound 1 described below | 0.016 parts by mass |
| Solvent | 2-Butanone (Wako Pure Chemical Industries, Ltd.) | 15.652 parts by mass |

[Chem. 5]

ORIENTATION CONTROLLING AGENT: COMPOUND 1 (COMPOUND DESCRIBED IN JP-A-2005-99248)

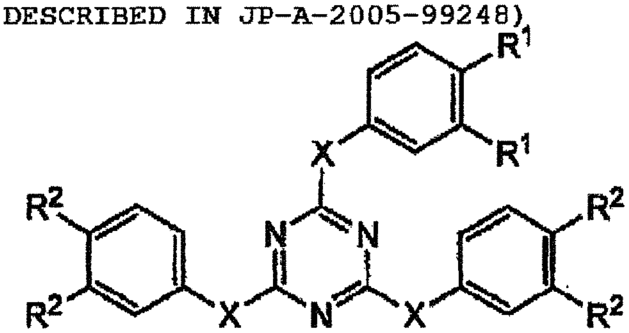

| $R^1$ | $R^2$ | X |
|---|---|---|
| $O(CH_2)_2O(CH_2)_2(CF_2)_6F$ | $O(CH_2)_2O(CH_2)_2(CF_2)_6F$ | NH |

[Chem. 6]

CHIRAL AGENT: COMPOUND 2 (COMPOUND DESCRIBED IN JP-A-2002-179668)

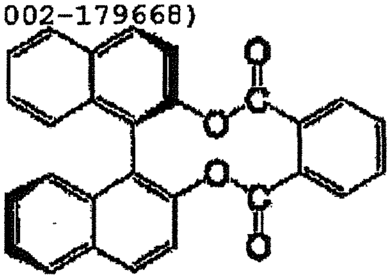

In addition, coating fluids (R2) to (R5) were prepared in the same manner except that the prescription amount of the chiral agent LC-756 for the coating fluid (R1) was changed to the amounts described in the following table.

[Table 3]

| Prescription amounts of LC-756 for coating fluids (R2) to (R5) | |
|---|---|
| Coating fluid | Prescription amount of LC-756 |
| Coating fluid (R2) | 0.282 parts by mass |
| Coating fluid (R3) | 0.345 parts by mass |
| Coating fluid (R4) | 0.341 parts by mass |
| Coating fluid (R5) | 0.349 parts by mass |

In addition, coating fluids (L2) to (L5) were prepared in the same manner except that the prescription amount of the chiral agent (compound 2) for the coating fluid (L1) was changed to the amounts described in the following table.

[Table 4]

| Prescription amounts of compound 2 for coating fluids (L2) to (L5) | |
|---|---|
| Coating fluid | Prescription amount of compound 2 |
| Coating fluid (L2) | 0.176 parts by mass |
| Coating fluid (L3) | 0.215 parts by mass |
| Coating fluid (L4) | 0.213 parts by mass |
| Coating fluid (L5) | 0.218 parts by mass |

<Manufacturing 1 of the infrared light reflection plate>

[Example 1]

An infrared light reflection plate was produced in the following order using the prepared coating fluids (R1), (R2), (R3), (L1) and (L2). A PET film (with no basecoat layer, thickness: 188 μm) manufactured by Fujifilm Corporation was used as a substrate.

(1) The respective coating fluids were coated using a wire bar on the PET film at room temperature so that the thickness of a dried film became 6 μm.
(2) After the film was dried at room temperature for 30 seconds so as to remove the solvent, the film was heated in a 125°C atmosphere for 2 minutes, and then made into a cholesteric liquid crystalline phase at 95°C. Next, the film was irradiated with ultraviolet rays in an electrodeless lamp "D BULB" (90 $mW/cm^2$) manufactured by Fusion UV Systems Inc. at an output of 60% for 6 seconds to 12 seconds, and the cholesteric liquid crystalline phase was fixed, thereby producing a film (light reflection layer).
(3) After the film was cooled to room temperature, the above steps (1) and (2) were repeated, thereby producing an infrared light reflection plate having a light reflection layer of the cholesteric liquid crystalline phase in which 5 layers were laminated.

Meanwhile, the coating fluids were coated in the order of (R3), (R2), (L2), (R1) and (L1).

[Example 2]

An infrared light reflection plate of Example 2 was produced in the same order as in Example 1 except that, among the coating fluids being coated, (R3) was changed to (R4).

[Comparative Example 1]

An infrared light reflection plate of Comparative Example 1 was produced in the same order as in Example 1 except that, among the coating fluids being coated, (R3) was changed to (R5) .

[Example 3]

An infrared light reflection plate having a light reflection layer of the cholesteric liquid crystalline phase in which 6 layers were laminated was produced in the same order as in Example 1 using the prepared coating fluids (R1), (R2), (R3), (L1), (L2) and (L3).

Meanwhile, the coating fluids were coated in the order of (R3), (L3), (R2), (L2), (R1) and (L1).

[Example 4]

An infrared light reflection plate of Example 4 was produced in the same order as in Example 3 except that, among the coating fluids being coated, (R3) was changed to (R4) and (L3) was changed to (L4).

[Comparative Example 2]

An infrared light reflection plate of Comparative Example 2 was produced in the same order as in Example 3 except that, among the coating fluids being coated, (R3) was changed to (R5) and (L3) was changed to (L5).

<Evaluation 1 of the infrared light reflection plate>

[Reflectivity measurement and heat shielding performance evaluation 1]

For the produced respective infrared light reflection plates, 5° regular reflection spectra were measured using a spectrophotometer "V-670" manufactured by JASCO Corporation, reflectivity at 790 nm, reflectivity at 800 nm and, furthermore, front surface transmission spectra were measured, and heat shielding performances (transmittances) with respect to the solar insolation spectra in wavelength ranges of 300 nm to 2500 nm were computed. The heat shielding performances were determined based on the following criteria. (The solar isolation spectrum transmittance is desirably lower.)

A: The solar isolation spectrum transmittance is 70% or less.
B: The solar isolation spectrum transmittance is larger than 70% and 75% or less.
C: The solar isolation spectrum transmittance is larger than 75% and 80% or less.
D: The solar isolation spectrum transmittance is larger than 80%.

The results are described in the following table.

[Evaluation 1 of the coloring of slantingly reflected light]

For the produced respective infrared light reflection plates, 60° regular reflection spectra were measured using a spectrophotometer "V-670" manufactured by JASCO Corporation, colorings with respect to a D65 standard light source were computed, and then the degrees of changes Δxy from the standard white point (x=0.3127, y=0.3290) in the xy chromaticity diagram were computed. The effects of suppressing the coloring of slantingly reflected light were determined based on the following criteria.

A: Δxy is 0.04 or less.
B: Δxy is larger than 0.04 and 0.05 or less.
C: Δxy is larger than 0.05 and 0.06 or less.
D: Δxy is larger than 0.06.

The results are described in the following table.

[Table 5]

| | Light reflection layer (first layer) <substrate side> | Light reflection layer (second layer) | Light reflection layer (third layer) | Light reflection layer (fourth layer) | Light reflection layer (fifth layer) | Light reflection layer (sixth layer) <air Interface side> | Reflectivity (790 nm) | Reflectivity (800 nm) | Evaluation 1 of heat shielding performance (front surface solar insolation spectrum transmittance) | Evaluation 1 of coloring of slantingly reflected light (Δxy) |
|---|---|---|---|---|---|---|---|---|---|---|
| Example 1 | Coating fluid (R3) Right circularly polarized light reflective Central wavelength 850 nm | Coating fluid (R2) Right circularly polarized light reflective Central wavelength 1040 nm | Coating fluid (L2) Left circularly polarized light reflective Central wavelength 1040 nm | Coating fluid (R1) Right circularly polarized light reflective Central wavelength 1240 nm | Coating fluid (L1) Left circularly polarized light reflective Central wavelength 1240 nm | - | 4.9% | 16.2% | 73.1% (B) | 0.047 (B) |
| Example 2 | Coating fluid (R4) Right circularly polarized light reflective Central wavelength 860 nm | Coating fluid (R2) Right circularly polarized light reflective Central wavelength 1040 nm | Coating fluid (L2) Left circularly polarized light reflective Central wavelength 1040 nm | Coating fluid (R1) Right circularly polarized light reflective Central wavelength 1240 nm | Coating fluid (L1) Left circularly polarized light reflective Central wavelength 1240 nm | - | 5.8% | 7.1% | 73.4% (B) | 0.038 (A) |

(continued)

| | Light reflection layer (first layer) <substrate side> | Light reflection layer (second layer) | Light reflection layer (third layer) | Light reflection layer (fourth layer) | Light reflection layer (fifth layer) | Light reflection layer (sixth layer) <air Interface side> | Reflectivity (790 nm) | Reflectivity (800 nm) | Evaluation 1 of heat shielding performance (front surface solar insolation spectrum transmittance) | Evaluation 1 of coloring of slantingly reflected light (Δxy) |
|---|---|---|---|---|---|---|---|---|---|---|
| Comparative Example 1 | Coating fluid (R5) Right circularly polarized light reflective Central wavelength 840 nm | Coating fluid (R2) Right circularly polarized light reflective Central wavelength 1040 nm | Coating fluid (L2) Left circularly polarized light reflective Central wavelength 1040 nm | Coating fluid (R1) Right circularly polarized light reflective Central wavelength 1240 nm | Coating fluid (L1) Left circularly polarized light reflective Central wavelength 1240 nm | - | 15.5% | 28.3% | 72.7% (B) | 0.054 (C) |
| Example 3 | Coalingfluid (R3) Right circularly polarized light reflective Central wavelength 850 nm | Coating fluid (L3) Right circularly polarized light reflective Central wavelength 850 nm | Coating fluid (R2) Right circularly polarized light reflective Central wavelength 1040 nm | Coating fluid (L2) Left circularly polarized light reflective Central wavelength 1040 nm | Coating fluid (R1) Right circularly polarized light reflective Central wavelength 1240 nm | Coating fluid (L1) Left circularly polarized light reflective Central wavelength 1240 nm | 6.1% | 23.6% | 68.7% (A) | 0.049 (B) |

(continued)

| | Light reflection layer (first layer) <substrate side> | Light reflection layer (second layer) | Light reflection layer (third layer) | Light reflection layer (fourth layer) | Light reflection layer (fifth layer) | Light reflection layer (sixth layer) <air Interface side> | Reflectivity (790 nm) | Reflectivity (800 nm) | Evaluation 1 of heat shielding performance (front surface solar insolation spectrum transmittance) | Evaluation 1 of coloring of slantingly reflected light (Δxy) |
|---|---|---|---|---|---|---|---|---|---|---|
| Example 4 | Coating fluid (R4) Right circularly polarized light reflective Central wavelength 860 nm | Coating fluid (L4) Right circularly polarized light reflective Central wavelength 860 nm | Coating fluid (R2) Right circularly polarized light reflective Central wavelength 1040 nm | Coating fluid (L2) Left circularly polarized light reflective Central wavelength 1040 nm | Coating fluid (R1) Right circularly polarized light reflective Central wavelength 1240 nm | Coating fluid (L1) Left circularly polarized light reflective Central wavelength 1240 nm | 6.5% | 8,4% | 69.2% (A) | 0.043 (B) |
| Comparative Example 2 | Coating fluid (R5) Right circularly polarized light reflective Central wavelength 840 nm | Coating fluid (L5) Right circularly polarized light reflective Central wavelength 840 nm | Coating fluid (R2) Right circularly polarized light reflective Central wavelength 1040 nm | Coating fluid (L2) Left circularly polarized light reflective Central wavelength 1040 nm | Coating fluid (R1) Right circularly polarized light reflective Central wavelength 1240 nm | Coating fluid (L1) Left circularly polarized light reflective Central wavelength 1240 nm | 27.2% | 50.8% | 68.1% (A) | 0.063 (D) |

As described in the above table, in the infrared light reflection plates of Examples 1 to 4 having the light reflection layers with a reflection central wavelength of 850 nm or more, for which the reflection wavelength bands were located on the short wavelength side, favorable heat shielding performances were exhibited and the colorings of slantingly reflected light were suppressed. Particularly, Examples 3 and 4 in which two light reflection layers having a reflection wavelength band on the short wavelength side were used as a pair exhibited more favorable heat shielding performances. Meanwhile, since the light reflection layer near the visible light range became two layers, the colorings of slantingly reflected light slightly deteriorated, which, practically, was slightly unsatisfactory but did not cause a problem.

Compared with Examples 1 to 4, in Comparative Examples 1 and 2, the heat shielding performances were slightly enhanced, but the colorings of slantingly reflected light were significantly deteriorated.

<Manufacturing 2 of the infrared light reflection plate>

[Example 5]

An infrared light reflection plate of Example 5 was produced in the same order as in Example 1 except that the order of the coating fluids being coated was changed to an order of (R3), (R2), (R1), (L1) and (L2), and (R2) and (L2) did not adjoin.

[Example 6]

An infrared light reflection plate of Example 6 was produced in the same order as in Example 1 except that the order of the coating fluids being coated was changed to an order of (R1), (R2), (R3), (L2) and (L1), and (R1) and (L1) and (R2) and (L2) did not adjoin.

[Example 7]

An infrared light reflection plate of Example 7 was produced in the same order as in Example 3 except that the order of the coating fluids being coated was changed to an order of (R3), (R2), (L2), (R1), (L1) and (R3), and four light reflection layers were included between (R3) and (L3).

[Example 8]

An infrared light reflection plate of Example 8 was produced in the same order as in Example 7 except that the order of the coating fluids being coated was changed to an order of (R3), (R2), (R1), (L1), (L2) and (R3), and (R2) and (L2) did not adjoin.

[Example 9]

An infrared light reflection plate of Example 9 was produced in the same order as in Example 8 except that the order of the coating fluids being coated was changed to an order of (R3), (R2), (R1), (L3), (L2) and (L1), and (R1) and (L1) did not adjoin.

<Evaluation 2 of the infrared light reflection plate>

[Reflectivity measurement and heat shielding performance evaluation 2]

For the produced respective infrared light reflection plates, 5° regular reflection spectra were measured using a spectrophotometer "V-670" manufactured by JASCO Corporation, and reflectivity at 790 nm and reflectivity at 800 nm were computed. In addition, 60° regular reflection spectra and 60° transmittance spectra were measured using a spectrophotometer "V-670" manufactured by JASCO Corporation so as to compute the heat shielding performances (transmittances) with respect to solar insolation spectra at a 60° slant in a wavelength range of 300 nm to 2500 nm. The heat shielding performances were determined based on the following criteria. (The solar isolation spectrum transmittance is desirably lower.)

A: The solar isolation spectrum transmittance is 70% or less.
B: The solar isolation spectrum transmittance is larger than 70% and 75% or less.
C: The solar isolation spectrum transmittance is larger than 75% and 80% or less.
D: The solar isolation spectrum transmittance is larger than 80%.

The results are described in the following table.

[Evaluation 1 of the coloring of slantingly reflected light]

For the produced respective infrared light reflection plates, the evaluation 1 of the coloring of reflected light was carried out in the same manner as what has been described above. The results are described in the following table.

[Table 6]

| | Light reflection layer (first layer) <substrate side> | Light reflection layer (second layer) | Light reflection layer (third layer) | Light reflection layer (fourth layer) | Light reflection layer (fifth layer) | Light reflection layer (sixth layer) <air interface side> | Evaluation 2 of heat shielding performance (60° solar insolation spectrum transmittance) | Evaluation 1 of coloring of slantingly reflected light (Δxy) |
|---|---|---|---|---|---|---|---|---|
| Example 1 | Coating fluid (R3) Right circularly polarized light reflective Central wavelength 850 nm | Coating fluid (R2) Right circularly polarized light reflective Central wavelength 1040 nm | Coating fluid (L2) Left circularly polarized light reflective Central wavelength 1040 nm | Coating fluid (R1) Right circularly polarized light reflective Central wavelength 1240 nm | Coating fluid (L1) Left circularly polarized light reflective Central wavelength 1240 nm | - | 66.3% (A) | 0.047 (B) |
| Example 5 | Coating fluid (R3) Right circularly polarized light reflective Central wavelength 850 nm | Coating fluid (R2) Right circularly polarized light reflective Central wavelength 1040 nm | Coating fluid (R1) Right circularly polarized light reflective Central wavelength 1240 nm | Coating fluid (L1) Left circularly polarized light reflective Central wavelength 1240 nm | Coating fluid (L2) Left circularly polarized light reflective Central wavelength 1040 nm | - | 70.9% (B) | 0.042 (B) |
| Example 6 | Coating fluid (R1) Right circularly polarized light reflective Central wavelength 1240 nm | Coating fluid (R2) Right circularly polarized light reflective Central wavelength 1040 nm | Coating fluid (R3) Right circularly polarized light reflective Central wavelength 850 nm | Coating fluid (L2) Left circularly polarized light reflective Central wavelength 1040 nm | Coating fluid (L1) Left circularly polarized light reflective Central wavelength 1240 nm | - | 71.2% (8) | 0.039 (A) |

(continued)

| | Light reflection layer (first layer) <substrate side> | Light reflection layer (second layer) | Light reflection layer (third layer) | Light reflection layer (fourth layer) | Light reflection layer (fifth layer) | Light reflection layer (sixth layer) <air interface side> | Evaluation 2 of heat shielding performance (60° solar insolation spectrum transmittance) | Evaluation 1 of coloring of slantingly reflected light (Δxy) |
|---|---|---|---|---|---|---|---|---|
| Example 3 | Coating fluid (R3) Right circularly polarized light reflective Central wavelength 850 nm | Coating fluid (L3) Right circularly polarized light reflective Central wavelength 850 nm | Coating fluid (R2) Right circularly polarized light reflective Central wavelength 1040 nm | Coating fluid (L2) Left circularly polarized light reflective Central wavelength 1040 nm | Coating fluid (R1) Right circularly polarized light reflective Central wavelength 1240 nm | Coating fluid (L1) Left circularly polarized light reflective Central wavelength 1240 nm | 62.2% (A) | 0.049 (B) |
| Example 7 | Coating fluid (R3) Right circularly polarized light reflective Central wavelength 850 nm | Coating fluid (R2) Right circularly polarized light reflective Central wavelength 1040 nm | Coating fluid (L2) Left circularly polarized light reflective Central wavelength 1040 nm | Coating fluid (R1) Right circularly polarized light reflective Central wavelength 1240 nm | Coating fluid (L1) Left circularly polarized light reflective Central wavelength 1240 nm | Coating fluid (L3) Right circularly polarized light retlective Central wavelength 850 nm | 64.1% (A) | 0.044 (B) |
| Example 8 | Coating fluid (R3) Right circularly polarized light reflective Central wavelength 850 nm | Coating fluid (R2) Right circularly polarized Rght reflective Central wavelength 1040 nm | Coating fluid (R1) Right circularly polarized light reflective Central wavelength 1240 nm | Coating fluid (L1) Left circularly polarized light reflective Central wavelength 1240 nm | Coating fluid (L2) Left circularly polarized light reflective Central wavelength 1040 nm | Coating fluid (L3) Right circularly polarized light reflective Central wavelength 850 nm | 68.2% (A) | 0.039 (A) |

(continued)

| | Light reflection layer (first layer) <substrate side> | Light reflection layer (second layer) | Light reflection layer (third layer) | Light reflection layer (fourth layer) | Light reflection layer (fifth layer) | Light reflection layer (sixth layer) <air interface side> | Evaluation 2 of heat shielding performance (60° solar insolation spectrum transmittance) | Evaluation 1 of coloring of slantingly reflected light ($\Delta xy$) |
|---|---|---|---|---|---|---|---|---|
| Example 9 | Coating fluid (R3) Right circularly polarized light reflective Central wavelength 850 nm | Coating fluid (R2) Right circularly polarized light reflective Central wavelength 1040 nm | Coating fluid (R1) Right circularly polarized light reflective Central wavelength 1240 nm | Coating fluid (L3) Right circularly polarized light reflective Central wavelength 850 nm | Coating fluid (L2) Left circularly polarized light reflective Central wavelength 1040 nm | Coating fluid (L1) Left circularly polarized light reflective Central wavelength 1240 nm | 69.7% (A) | 0.040 (B) |

Since the reflectivity and heat shielding performance in the front surface direction rarely changed even when the order of coating the light reflection layers was changed, for Examples 5 to 9 (and Examples 1 and 3 for comparison), the heat shielding performances at a 60° slant were described in Table 6. Meanwhile, the reflectivities of Examples 5 and 6 in the front surface direction were the same as in Example 1, and the reflectivities of Examples 7 to 9 in the front surface direction were the same as in Example 3.

As described in the above table, in Examples 5 and 6, compared with Example 1, while the heat shielding performances slightly degraded, the colorings of slantingly reflected light were suppressed. The effect of the light reflection layers (R2) and (L2) and, furthermore, the light reflection layers (R1) and (L1), which formed a pair, being coated so as not to adjoin respectively was confirmed.

In addition, in Examples 7 to 9 as well, compared with Example 3, similarly, while the heat shielding performances slightly degraded, the colorings of slantingly reflected light were suppressed. Particularly, in Example 8 in which only the pair of the light reflection layers (R1) and (L1) adjoined and four layers were interposed between the light reflection layers (R3) and (L3), it was confirmed that the favorable heat shielding performance and the great effect of suppressing the coloring of slantingly reflected light were confirmed.

<Manufacturing of the infrared light reflection plate, the laminated interlayer sheet for laminated glass and the laminated glass>

(Preparation of a coating fluid for the highly adhesive layer)

A coating fluid for the highly adhesive layer having a composition described below was prepared.

| | |
|---|---|
| Polyvinyl butyral resin B1776 (manufactured by Changchun Co., (Taiwan)) | 10 parts by mass |
| Methoxypropyl acetate (PGMEA) | 100 parts by mass |

(Preparation of a coating fluid for the basecoat layer)

A coating fluid for the basecoat layer having a composition described below was prepared.

| | |
|---|---|
| Acrylic ester resin JURYMER ET-410 (manufactured by Toagosei Co., Ltd., concentration of the solid content 30%) | 50 parts by mass |
| Methanol | 50 parts by mass |

(Preparation of a coating fluid for the orientation layer)

A coating fluid for the orientation layer having a composition described below was prepared.

| | |
|---|---|
| Denatured polyvinyl alcohol PVA 203 (manufacturedby Kuraray Co., Ltd.) | 10 parts by mass |
| Glutaraldehyde | 0.5 parts by mass |
| Water | 371 parts by mass |
| Methanol | 119 parts by mass |

(Preparation of a coating fluid for the undercoat layer)

A coating fluid for the undercoat layer having a composition described below was prepared.

| | |
|---|---|
| Styrene-acrylic resin ARON S-1001 (manufacturedby Toagosei Co., Ltd., concentration of the solid content 50%) | 20 parts by mass |
| Methoxypropyl acetate (PGMEA) | 80 parts by mass |

[Example 10]

(Manufacturing of the infrared light reflection plate)

The coating fluid for the undercoat layer was coated on a PET film (manufactured by Fujifilm Corporation,

thickness: 188 μm) using a wire bar so that the dried film thickness became 0.5 μm. After that, the film was heated at 150°C for 10 minutes, dried and solidified, thereby forming a highly adhesive layer (undercoat layer).

Next, the coating fluid for the basecoat layer was coated using a wire bar on the surface of the undercoat layer-attached PET film produced above on which the undercoat layer was not coated so that the dried film thickness became 0.25 μm. After that, the film was heated at 150°C for 10 minutes, dried and solidified, thereby forming a basecoat layer.

Next, the coating fluid for the orientation layer was coated using a wire bar on the formed basecoat layer so that the dried film thickness became 1.0 μm. After that, the film was heated at 100°C for 2 minutes, dried and solidified, thereby forming an orientation layer. A rubbing treatment (rayon fabric, pressure: 0.1 kgf, rotation speed: 1000 rpm, transportation speed: 10 m/min, the number of rotations: 1 reciprocation) was carried out on the orientation layer.

Next, the coating fluids were coated on the formed orientation layer in the same order as in Example 8, which was the order of (R3), (R2), (R1), (L1), (L2) and (L3), thereby forming a light reflection layer of the cholesteric liquid crystalline phase in which 6 layers were laminated.

Next, the coating fluid for the highly adhesive layer was coated on the surface of the top layer of the light reflection layers of the cholesteric liquid crystalline phase, which had been formed above, using a wire bar so that the dried film thickness became 1.0 μm. After that, the film was heated at 150°C for 10 minutes, dried and solidified, thereby forming a highly adhesive layer and producing an infrared light reflection plate.

(Manufacturing of the laminated interlayer sheet for laminated glass and the laminated glass)

Next, the infrared light reflection plate produced above and a polyvinyl butyral interlayer sheet for laminated glass (thickness: 380 μm) were subjected to a lamination treatment (heating temperature: 80°C, pressurizing force: 1.5 $kg/cm^2$, transportation speed: 0.1 m/min) using a laminator (manufactured by Taisei Laminator Co., Ltd.), thereby producing a laminated interlayer sheet for laminated glass.

Next, the laminated interlayer sheet for laminated glass produced above was sandwiched between two pieces of clear glass (thickness: 2 mm), put into a rubber bag, and the bag was depressurized using a vacuum pump. After that, the laminated interlayer sheet was heated to a temperature of 90°C under reduced pressure, held for 30 minutes, and then returned to room temperature and normal pressure. After that, the laminated interlayer sheet was held under conditions of a pressure of 1.3 MPa and a temperature of 130°C for 20 minutes in an autoclave. The laminated interlayer sheet was returned to room temperature and normal pressure, and infrared light reflection function-provided laminated glass of Example 10 was produced.

[Example 11]

Infrared light reflection function-provided laminated glass of Example 11 was produced in the same order as in Example 10 except that, among the two pieces of clear glass, the clear glass on the PET film substrate side of the infrared light reflection plate was changed to heat radiation-absorbing glass (visible light transmittance with the standard A light source: 85%, principal wavelength: 550 nm).

<Evaluation of the laminated glass>

[Visible light transmittance]

For the respective pieces of the produced infrared light reflection function-provided laminated glass, front surface transmission spectra on the cholesteric liquid crystalline phase reflection layer side were measured using a spectrophotometer "V-670" manufactured by JASCO Corporation based on JIS-R 3211, and the visible light transmittances with respect to the standard light source A were computed. The visible light transmittances were determined based on the following criteria.

O: The visible light transmittance is 70% or more.

X: The visible light transmittance is less than 70%.

The results are described in the following table.

[Evaluation 3 of the heat shielding performances]

For the respective pieces of the produced infrared light reflection function-provided laminated glass, 5° regular reflection spectra and front surface transmission spectra on the cholesteric liquid crystalline phase reflection layer side were measured using a spectrophotometer "V-670" manufactured by JASCO Corporation so as to compute the heat shielding performances (transmittances) with respect to solar insolation spectra in a wavelength range of 300 nm to 2500 nm. The heat shielding performances were determined based on the following criteria. (The solar insolation spectrum

transmittance is desirably lower.)

A: The solar isolation spectrum transmittance is 50% or less.
B: The solar isolation spectrum transmittance is larger than 50% and 60% or less.
C: The solar isolation spectrum transmittance is larger than 60% and 70% or less.
D: The solar isolation spectrum transmittance is larger than 70%.

The results are described in the following table.

<Evaluation 2 of the coloring of slantingly reflected light>

For the respective pieces of the produced infrared light reflection function-provided laminated glass, 60° regular reflection spectra on the cholesteric liquid crystalline phase reflection layer side were measured using a spectrophotometer "V-670" manufactured by JASCO Corporation, colorings with respect to the D65 standard light source were computed, and then the degrees of changes Δxy from the standard white point (x=0.3127, y=0.3290) in the xy chromaticity diagram were computed. The effects of suppressing the coloring of slantingly reflected light were determined based on the following criteria.

A: Δxy is 0.04 or less.

B: Δxy is larger than 0.04 and 0.05 or less.

C: Δxy is larger than 0.05 and 0.06 or less.

D: Δxy is larger than 0.06.

The results are described in the following table.

[Table 7]

| | Visible light transmittance (standard light source A) | Evaluation 3 of heat shielding performance (front surface solar insolation spectrum transmittance) | Evaluation 2 of coloring of slantingly reflected light (Δxy) |
|---|---|---|---|
| Example 10 | 84.0% (B) | 57.4% (B) | 0.037 (A) |
| Example 11 | 72.7% (B) | 46.3% (A) | 0.037 (A) |

As described in the above table, since Examples 10 and 11 employed a laminated glass form, compared with a film form, more favorable heat shielding performances and a more favorable effect of suppressing the coloring of slantingly reflected light were exhibited.
Particularly, in Example 11 in which heat radiation-absorbing glass absorbing light in the visible light range was used to produce the laminated glass, an extremely favorable heat shielding performance was exhibited.
The above results indicated that, according to the embodiments of the invention, an infrared light reflection plate in which the heat shielding performance is excellent and the coloring of reflected light in a slanting direction is suppressed can be obtained.
In addition, it was also indicated that, in a case in which laminated glass is produced, the heat shielding performance is further improved by using heat radiation-absorbing glass absorbing light in the visible light range.

[Example 100]

In Examples 10 and 11, after the completion of heating and pressurization, the films were cooled in the air over approximately 3 hours in a state in which the pressure was held, and the pressure was released when the temperature in the autoclave reached 40°C or lower. At this time, the pressure before the release was 0.9 MPa.
For the produced laminated glass, wrinkles in the polyvinyl butyral resin film and film cracking in the infrared ray reflection layer were evaluated, and it was found that both the wrinkles and the film cracking were further improved compared with Examples 10 and 11. In addition, as a result of visually checking the reflection variation of the laminated

glass plates, it was found that the reflection variation was further improved compared with Examples 10 and 11.

[Example 200]

PVB, which was the first interlayer, was overlapped on the outermost layer (on the air interface side) of the light reflection layers in the infrared light reflection plate including PET as the substrate manufactured in Example 10, passed through laminator rolls under conditions of 120°C, 0.2 MPa and 0.2 m/min, and the outermost layer of the light reflection layers and the first interlayer were adhered. At this time, in order to prevent embossing on the first interlayer from being crushed, the laminate roll on the first interlayer side was set to 25°C, and the laminate roll on the PET side was set to 120°C. Only the PET support was peeled from the laminated laminate so as to produce a laminate of the first interlayer and the infrared ray reflection layer laminate. Furthermore, PVB which was the second interlayer was laminated on the surface of the outermost layer of the light reflection layers from which PET had been peeled off. Completed laminates including the infrared ray reflection layer laminate and the interlayers were overlapped so as to produce glass/ the first interlayer/ the infrared ray reflection layer laminate/ the second interlayer/ glass, thereby manufacturing a laminate sandwiched between glass plates.

The obtained laminate sandwiched between glass plates was preliminarily pressed for 30 minutes at 95°C in a vacuum. After the preliminary pressing, the laminate sandwiched between glass plates was pressed while being heated under conditions of 1.3 MPa and 120°C, thereby producing laminated glass. After the laminated glass was produced, portions protruding from the glass were cut, and laminated glass including no substrate was manufactured.

As a result of evaluating the performances of the obtained laminated glass, the performance was approximately the same as in Example 10.

Reference Signs List

12 SUBSTRATE
14a LIGHT REFLECTION LAYER (LIGHT REFLECTION LAYER X1)
14b LIGHT REFLECTION LAYER (LIGHT REFLECTION LAYER X2)
16a LIGHT REFLECTION LAYER (LIGHT REFLECTION LAYER X3)
16b LIGHT REFLECTION LAYER (LIGHT REFLECTION LAYER X4)
18 AND 18a LIGHT REFLECTION LAYER (LIGHT REFLECTION LAYER X5)
18b LIGHT REFLECTION LAYER (LIGHT REFLECTION LAYER X6)
22, 24 INTERLAYER
32, 34 GLASS PLATE

## Claims

**1.** An infrared light reflection layer laminate selected from either:

(i) an infrared light reflection layer laminate comprising:

a light reflection layer X1;
a light reflection layer X2;
a light reflection layer X3;
a light reflection layer X4; and
a light reflection layer X5 each of which is formed by fixing a cholesteric liquid crystalline phase,
wherein the light reflection layer X1 and the light reflection layer X2 reflect circularly polarized light in mutually opposite directions, a reflection central wavelength $\lambda_1$ (nm) of the light reflection layer X1 and a reflection central wavelength $\lambda_1$' (nm) of the light reflection layer X2 are substantially equal and both are in a range of 1190 nm to 1290 nm,
wherein the light reflection layer X3 and the light reflection layer X4 reflect circularly polarized light in mutually opposite directions, a reflection central wavelength $\lambda_2$ (nm) of the light reflection layer X3 and a reflection central wavelength $\lambda_2$' (nm) of the light reflection layer X4 are substantially equal and both are in a range of 1010 nm to 1070 nm,
wherein a reflection central wavelength $\lambda_3$ (nm) of the light reflection layer X5 is in a range of 850 nm to 900 nm, and

wherein a reflectivity at a wavelength of 790 nm is 15% or less, and infrared rays are reflected; or

(ii) an infrared light reflection layer laminate comprising:

a light reflection layer X1;
a light reflection layer X2;
a light reflection layer x3;
a light reflection layer X4;
a light reflection layer X5; and
a light reflection layer X6 each of which is formed by fixing a cholesteric liquid crystalline phase,
wherein the light reflection layer X1 and the light reflection layer X2 reflect circularly polarized light in mutually opposite directions, a reflection central wavelength $\lambda_1$ (nm) of the light reflection layer X1 and a reflection central wavelength $\lambda_1$' (nm) of the light refection layer X2 are substantially equal and both are in a range of 1190 nm to 1290 nm,
wherein the light reflection layer X3 and the light reflection layer X4 reflect circularly polarized light in mutually opposite directions, a reflection central wavelength $\lambda_2$ (nm) of the light reflection layer X3 and a reflection central wavelength $\lambda_2$' (nm) of the light reflection layer X4 are substantially equal and both are in arrange of 1010 nm to 1070 nm,
wherein the light reflection layer X5 and the light reflection layer X6 reflect circularly polarized light in mutually opposite directions, a reflection central wavelength $\lambda_3$ (nm) of the light reflection layer X5 and a reflection central wavelength $\lambda_3$' (nm) of the light reflection layer X6 are substantially equal and both in a range of 850 nm to 900 nm, and
wherein a reflectivity at a wavelength of 790 nm is 15% or less, and infrared rays are reflected.

**2.** The infrared light reflection layer laminate according to Claim 1,
wherein a reflectivity at a wavelength of 800 nm is in a range of 15% to 50%.

**3.** The infrared light reflection layer laminate according to Claim 1 or 2,
wherein at least one light reflection layer of the light reflection layers is a layer formed by making a liquid crystal composition coated on a surface of the lower light reflection layer into a cholesteric liquid crystalline phase and fixing the cholesteric liquid crystalline phase.

**4.** The infrared light reflection layer laminate according to any one of Claims 1 to 3, which is a laminate according to item (i) of Claim 1 and
wherein the light reflection layer X1 and the light reflection layer X2 do not adjoin, and the light reflection layer X3 and the light reflection layer X4 do not adjoin.

**5.** The infrared light reflection layer laminate according to any one of Claims 1 to 3, which is a laminate according to item (ii) of Claim 1 and
wherein the light reflection layer X1 and the light reflection layer X2 adjoin, and the light reflection layer X5 and the light reflection layer X6 are laminated with at least two light reflection layers therebetween.

**6.** An infrared light reflection plate comprising:

a substrate; and
the infrared light reflection layer laminate according to any of Claims 1 to 5 disposed on the substrate.

**7.** The infrared light reflection plate according to Claim 6,
wherein the substrate is a polymer film.

**8.** A laminated interlayer sheet for glass comprising:

the infrared light reflection layer laminate according to any one of Claims 1 to 5 or the infrared light reflection plate according to Claim 6 or 7; and
an interlayer sheet disposed on an outermost layer of at least one of the infrared light reflection layer laminate and the infrared light reflection plate.

**9.** The laminated interlayer sheet for glass according to Claim 8 comprising:

interlayer sheets respectively on the outermost layers of both the infrared light reflection layer laminate and the infrared light reflection plate.

**10.** Laminated glass comprising:

two pieces of glass; and
the laminated interlayer sheet for glass according to Claim 8 or 9 included between the two pieces of glass.

**11.** The laminated glass according to Claim 10,
wherein at least one of the two pieces of glass is heat radiation-absorbing glass,
the heat radiation-absorbing glass has a visible light transmittance under a standard A light source in a range of 80% to 90%, and a main wavelength measured using the standard A light source is in a range of 495 nm to 560 nm.

**12.** A method for manufacturing a laminated interlayer sheet for laminated glass comprising:

a first step of adhering a first interlayer sheet on one surface of the infrared light reflection plate according to Claim 6 or 7 so as to obtain a first laminate; and
a second step of adhering a second interlayer sheet on a surface of the first laminate opposite to the surface to which the first interlayer sheet is adhered.

**13.** The method for manufacturing a laminated interlayer sheet for glass according to Claim 12 comprising:

a step of, in the first step, peeling the substrate included in the infrared light reflection plate from the first laminate at the same time as or after a step of adhering the infrared light reflection plate and the first interlayer sheet; and
a step of, in the second step, adhering the second interlayer sheet to the surface of the first laminate from which the substrate has been peeled.

**14.** A method for manufacturing laminated glass comprising:

a step of manufacturing a laminate sandwiched between two glass plates by sandwiching the laminated interlayer sheet for laminated glass according to Claim 8 or 9 between the two glass plates; and
a step of pressing the laminate sandwiched between the glass plates under heating.

**15.** A window member for buildings or vehicles,
wherein the infrared light reflection layer laminate according to any one of Claims 1 to 5, the infrared light reflection plate according to Claim 6 or 7, the laminated interlayer sheet for glass according to Claim 8 or 9, or the laminated glass according to either one of Claims 10 and 11 is used.

## Patentansprüche

**1.** Infrarotlicht-Reflektionsschicht-Laminat, ausgewählt aus entweder:

(i) einem Infrarotlicht-Reflektionsschicht-Laminat, umfassend:

eine Lichtreflektionsschicht X1;
eine Lichtreflektionsschicht X2;
eine Lichtreflektionsschicht X3;
eine Lichtreflektionsschicht X4; und
eine Lichtreflektionsschicht X5, von denen jede durch Fixieren einer cholesterischen flüssigkristallinen Phase gebildet ist,
worin die Lichtreflektionsschicht X1 und die Lichtreflektionsschicht X2 zirkulär polarisiertes Licht in zueinander entgegengesetzten Richtungen reflektieren, die zentrale Reflektionswellenlänge $\lambda_1$ (nm) der Lichtreflektionsschicht X1 und die zentrale Reflektionswellenlänge $\lambda_1'$ (nm) der Lichtreflektionsschicht X2 im Wesentlichen gleich sind und beide im Bereich von 1.190 nm bis 1.290 nm liegen,
worin die Lichtreflektionsschicht X3 und die Lichtreflektionsschicht X4 zirkulär polarisiertes Licht in zueinander entgegengesetzten Richtungen reflektieren, wobei die zentrale Reflektionswellenlänge $\lambda_2$ (nm) der Lichtreflektionsschicht X3 und die zentrale Reflektionswellenlänge $\lambda_2'$ (nm) der Lichtreflektionsschicht X4

im Wesentlichen gleich sind und beide im Bereich von 1.010 nm bis 1.070 nm liegen,
worin eine zentrale Reflektionswellenlänge $\lambda_3$ (nm) der Lichtreflektionsschicht X5 im Bereich von 850 nm bis 900 nm liegt und
worin das Reflektionsvermögen bei einer Wellenlänge von 790 nm 15 % oder weniger beträgt und Infrarotstrahlen reflektiert werden; oder

(ii) einem Infrarotlicht-Reflektionsschicht-Laminat, umfassend:

eine Lichtreflektionsschicht X1;
eine Lichtreflektionsschicht X2;
eine Lichtreflektionsschicht X3;
eine Lichtreflektionsschicht X4; und
eine Lichtreflektionsschicht X5; und
eine Lichtreflektionsschicht X6, von denen jede durch Fixieren einer cholesterischen flüssigkristallinen Phase gebildet ist,
worin die Lichtreflektionsschicht X1 und die Lichtreflektionsschicht X2 zirkulär polarisiertes Licht in zueinander entgegengesetzten Richtungen reflektieren, wobei die zentrale Reflektionswellenlänge $\lambda_1$ (nm) der Lichtreflektionsschicht X1 und die zentrale Reflektionswellenlänge $\lambda_1'$ (nm) der Lichtreflektionsschicht X2 im Wesentlichen gleich sind und beide im Bereich von 1.190 nm bis 1.290 nm liegen,
worin die Lichtreflektionsschicht X3 und die Lichtreflektionsschicht X4 zirkulär polarisiertes Licht in zueinander entgegengesetzten Richtungen reflektieren, wobei die zentrale Reflektionswellenlänge $\lambda_2$ (nm) der Lichtreflektionsschicht X3 und die zentrale Reflektionswellenlänge $\lambda_2'$ (nm) der Lichtreflektionsschicht X4 im Wesentlichen gleich sind und beide im Bereich von 1.010 nm bis 1.070 nm liegen,
worin die Lichtreflektionsschicht X5 und die Lichtreflektionsschicht X6 zirkulär polarisiertes Licht in zueinander entgegengesetzten Richtungen reflektieren, wobei die zentrale Reflektionswellenlänge $\lambda_3$ (nm) der Lichtreflektionsschicht X5 und die zentrale Reflektionswellenlänge $\lambda_3'$ (nm) der Lichtreflektionsschicht X6 im Wesentlichen gleich sind und beide im Bereich von 850 nm bis 900 nm liegen, und
worin das Reflektionsvermögen bei einer Wellenlänge von 790 nm 15 % oder weniger beträgt und Infrarotstrahlen reflektiert werden.

**2.** Infrarotlicht-Reflektionsschicht-Laminat gemäß Anspruch 1,
worin das Reflektionsvermögen bei einer Wellenlänge von 800 nm im Bereich von 15 % bis 50 % liegt.

**3.** Infrarotlicht-Reflektionsschicht-Laminat gemäß Anspruch 1 oder 2,
worin zumindest eine Lichtreflektionsschicht der Lichtreflektionsschichten eine Schicht ist, die gebildet ist, indem eine Flüssigkristallzusammensetzung, die auf eine Oberfläche der unteren Lichtreflektionsschicht beschichtet ist, zu einer cholesterischen flüssigkristallinen Phase gemacht wird und die cholesterische flüssigkristalline Phase fixiert wird.

**4.** Infrarotlicht-Reflektionsschicht-Laminat gemäß irgendeinem der Ansprüche 1 bis 3, welches ein Laminat gemäß Punkt (i) von Anspruch 1 ist und
worin die Lichtreflektionsschicht X1 und die Lichtreflektionsschicht X2 nicht aneinander angrenzen, und worin die Lichtreflektionsschicht X3 und die Lichtreflektionsschicht X4 nicht aneinander angrenzen.

**5.** Infrarotlicht-Reflektionsschicht-Laminat gemäß irgendeinem der Ansprüche 1 bis 3, welches ein Laminat gemäß Punkt (ii) von Anspruch 1 ist und
worin die Lichtreflektionsschicht X1 und die Lichtreflektionsschicht X2 aneinander angrenzen, und worin die Lichtreflektionsschicht X5 und die Lichtreflektionsschicht X6 so laminiert sind, dass mindestens zwei Lichtreflektionsschichten hierzwischen vorliegen.

**6.** Infrarotlicht-Reflektionsplatte, umfassend:

ein Substrat; und
das Infrarotlicht-Reflektionsschicht-Laminat gemäß irgendeinem der Ansprüche 1 bis 5, das auf dem Substrat angeordnet ist.

**7.** Infrarotlicht-Reflektionsplatte gemäß Anspruch 6, worin das Substrat eine Polymerfolie ist.

**8.** Laminiertes Zwischenblatt für Glas, umfassend:

das Infrarotlicht-Reflektionsschicht-Laminat gemäß irgendeinem der Ansprüche 1 bis 5 oder die Infrarotlicht-Reflektionsplatte gemäß Anspruch 6 oder 7; und
ein Zwischenblatt, das auf einer äußersten Schicht von zumindest einem von dem Infrarotlicht-Reflektionsschicht-Laminat und der Infrarotlicht-Reflektionsplatte angeordnet ist.

**9.** Laminiertes Zwischenblatt für Glas gemäß Anspruch 8, umfassend:
Zwischenblätter jeweils auf den äußersten Schichten von sowohl dem Infrarotlicht-Reflektionsschicht-Laminat als auch der Infrarotlicht-Reflektionsplatte.

**10.** Laminiertes Glas, umfassend:

zwei Glasstücke; und
das laminierte Zwischenblatt für Glas gemäß Anspruch 8 oder 9, das zwischen den zwei Stücken von Glas enthalten ist.

**11.** Laminiertes Glas gemäß Anspruch 10,
worin zumindest eines der zwei Stücke Glas ein Wärmestrahlung-absorbierendes Glas ist,
wobei das Wärmestrahlung-absorbierende Glas eine Durchlässigkeit für sichtbares Licht unter einer Standard A-Lichtquelle im Bereich von 80 % bis 90 % aufweist und die Hauptwellenlänge, die unter Verwendung der Standard A-Lichtquelle gemessen wird, im Bereich von 495 nm bis 560 nm liegt.

**12.** Verfahren zur Herstellung eine laminierten Zwischenblatts für laminiertes Glas, umfassend:

einen ersten Schritt zum Anhaften eines ersten Zwischenblatts auf eine Oberfläche der Infrarotlicht-Reflektionsplatte gemäß Anspruch 6 oder 7, um so ein erstes Laminat zu erhalten; und
einen zweiten Schritt zum Anhaften eines zweiten Zwischenblatts auf eine Oberfläche des ersten Laminats gegenüberliegend zu der Oberfläche, auf der das erste Zwischenblatt angehaftet ist.

**13.** Verfahren zur Herstellung eines laminierten Zwischenblatts für Glas gemäß Anspruch 12, umfassend:

einen Schritt zum Ablösen des Substrats, das in der Infrarotlicht-Reflektionsplatte enthalten ist, von dem ersten Laminat zum gleichen Zeitpunkt wie oder nach einem Schritt zum Anhaften der Infrarotlicht-Reflektionsplatte und des ersten Zwischenblatts im ersten Schritt; und
einen Schritt zum Anhaften des zweiten Zwischenblatts an die Oberfläche des ersten Laminats, von dem das Substrat abgelöst worden ist, im zweiten Schritt.

**14.** Verfahren zur Herstellung von laminiertem Glas, umfassend:

einen Schritt zur Herstellung eines Laminats, das zwischen zwei Glasplatten eingeklemmt ist, durch Einklemmen des laminierten Zwischenblatts für laminiertes Glas gemäß Anspruch 8 oder 9 zwischen zwei Glasplatten; und
einen Schritt zum Pressen des Laminats, das zwischen den Glasplatten eingeklemmt ist, unter Erwärmen.

**15.** Fensterelement für Gebäude oder Fahrzeuge,
worin das Infrarotlicht-Reflektionsschicht-Laminat gemäß irgendeinem der Ansprüche 1 bis 5, die Infrarotlicht-Reflektionsplatte gemäß Anspruch 6 oder 7, das laminierte Zwischenblatt für Glas gemäß Anspruch 8 oder 9 oder das laminierte Glas gemäß irgendeinem der Ansprüche 10 und 11 verwendet wird.

## Revendications

**1.** Stratifié de couches de réflexion de lumière infrarouge choisi parmi :

i) un stratifié de couches de réflexion de lumière infrarouge comprenant :

une couche de réflexion de lumière X1 ;
une couche de réflexion de lumière X2 ;

une couche de réflexion de lumière X3 ;
une couche de réflexion de lumière X4 ; et
une couche de réflexion de lumière X5, chacune d'entre elles étant formée par fixation d'une phase cristalline liquide cholestérique,
dans lequel la couche de réflexion de lumière X1 et la couche de réflexion de lumière X2 réfléchissent la lumière polarisée circulairement dans des directions opposées, une longueur d'onde centrale de réflexion $\lambda_1$ (en nm) de la couche de réflexion de lumière X1 et une longueur d'onde centrale de réflexion $\lambda_1$' (en nm) de la couche de réflexion de lumière X2 sont sensiblement égales et toutes deux se situent dans une plage de 1190 nm à 1290 nm,
dans lequel la couche de réflexion de lumière X3 et la couche de réflexion de lumière X4 réfléchissent la lumière polarisée circulairement dans des directions opposées, une longueur d'onde centrale de réflexion $\lambda_2$ (en nm) de la couche de réflexion de lumière X3 et une longueur d'onde centrale de réflexion $\lambda_2$' (en nm) de la couche de réflexion de lumière X4 sont sensiblement égales et toutes deux se situent dans une plage de 1010 nm à 1070 nm,
dans lequel une longueur d'onde centrale de réflexion $\lambda_3$ (en nm) de la couche de réflexion de lumière X5 se situe dans une plage de 850 nm à 900 nm, et
dans lequel une réflectivité à une longueur d'onde de 790 nm est inférieure ou égale à 15 %, et les rayons infrarouges sont réfléchis ; ou

ii) un stratifié de couches de réflexion de lumière infrarouge comprenant :

une couche de réflexion de lumière X1 ;
une couche de réflexion de lumière X2 ;
une couche de réflexion de lumière X3 ;
une couche de réflexion de lumière X4 ;
une couche de réflexion de lumière X5 ; et
une couche de réflexion de lumière X6, chacune d'entre elles étant formée par fixation d'une phase cristalline liquide cholestérique,
dans lequel la couche de réflexion de lumière X1 et la couche de réflexion de lumière X2 réfléchissent la lumière polarisée circulairement dans des directions opposées, une longueur d'onde centrale de réflexion $\lambda_1$ (en nm) de la couche de réflexion de lumière X1 et une longueur d'onde centrale de réflexion $\lambda_1$' (en nm) de la couche de réflexion de lumière X2 sont sensiblement égales et toutes deux se situent dans une plage de 1190 nm à 1290 nm,
dans lequel la couche de réflexion de lumière X3 et la couche de réflexion de lumière X4 réfléchissent la lumière polarisée circulairement dans des directions opposées, une longueur d'onde centrale de réflexion $\lambda_2$ (en nm) de la couche de réflexion de lumière X3 et une longueur d'onde centrale de réflexion $\lambda_2$' (en nm) de la couche de réflexion de lumière X4 sont sensiblement égales et toutes deux se situent dans une plage de 1010 nm à 1070 nm,
dans lequel la couche de réflexion de lumière X5 et la couche de réflexion de lumière X6 réfléchissent la lumière polarisée circulairement dans des directions opposées, une longueur d'onde centrale de réflexion $\lambda_3$ (en nm) de la couche de réflexion de lumière X5 et une longueur d'onde centrale de réflexion $\lambda_3$' (en nm) de la couche de réflexion de lumière X6 sont sensiblement égales et toutes deux dans une plage de 850 nm à 900 nm, et
dans lequel une réflectivité à une longueur d'onde de 790 nm est inférieure ou égale à 15 %, et les rayons infrarouges sont réfléchis.

**2.** Stratifié de couches de réflexion de lumière infrarouge selon la revendication 1,
dans lequel une réflectivité à une longueur d'onde de 800 nm se situe dans une plage de 15 % à 50 %.

**3.** Stratifié de couches de réflexion de lumière infrarouge selon la revendication 1 ou 2,
dans lequel au moins une couche de réflexion de lumière parmi les couches de réflexion de lumière est une couche formée en transformant une composition de cristaux liquides appliquée sur une surface de la couche inférieure de réflexion de lumière en une phase cristalline liquide cholestérique et en fixant la phase cristalline liquide cholestérique.

**4.** Stratifié de couches de réflexion de lumière infrarouge selon l'une quelconque des revendications 1 à 3, qui est un stratifié selon l'alinéa (i) de la revendication 1 et
dans lequel la couche de réflexion de lumière X1 et la couche de réflexion de lumière X2 ne sont pas adjacentes, et la couche de réflexion de lumière X3 et la couche de réflexion de lumière X4 ne sont pas adjacentes.

**5.** Stratifié de couches de réflexion de lumière infrarouge selon l'une quelconque des revendications 1 à 3, qui est un stratifié selon l'alinéa (ii) de la revendication 1 et
dans lequel la couche de réflexion de lumière X1 et la couche de réflexion de lumière X2 sont adjacentes, et la couche de réflexion de lumière X5 et la couche de réflexion de lumière X6 sont stratifiées avec au moins deux couches de réflexion de lumière entre elles.

**6.** Plaque de réflexion de lumière infrarouge comprenant :

un substrat ; et
le stratifié de couches de réflexion de lumière infrarouge selon l'une quelconque des revendications 1 à 5 disposé sur le substrat.

**7.** Plaque de réflexion de lumière infrarouge selon la revendication 6,
dans lequel le substrat est un film polymère.

**8.** Feuille inter-couche stratifiée pour verre, comprenant :

le stratifié de couches de réflexion de lumière infrarouge selon l'une quelconque des revendications 1 à 5 ou la plaque de réflexion de lumière infrarouge selon la revendication 6 ou 7 ; et
une feuille inter-couche disposée sur une couche externe d'au moins l'un du stratifié de couches de réflexion de lumière infrarouge et de la plaque de réflexion de lumière infrarouge.

**9.** Feuille inter-couche stratifiée pour verre selon la revendication 8 comprenant :
des feuilles intercalaires situées respectivement sur les couches externes du stratifié de couches de réflexion de lumière infrarouge et de la plaque de réflexion de lumière infrarouge.

**10.** Verre feuilleté comprenant :

deux pièces de verre ; et
la feuille inter-couche stratifiée pour verre selon la revendication 8 ou 9, incluse entre les deux pièces de verre.

**11.** Verre feuilleté selon la revendication 10,
dans lequel au moins l'une des deux pièces de verre est un verre absorbant les rayonnements de chaleur,
le verre absorbant les rayonnements de chaleur a une transmittance de lumière visible sous une source de lumière A standard dans une plage de 80% à 90%, et une longueur d'onde principale mesurée au moyen de la source de lumière A standard se situe dans une plage de 495 nm à 560 nm.

**12.** Procédé de fabrication d'une feuille inter-couche stratifiée pour verre feuilleté, comprenant :

une première étape de collage d'une première feuille inter-couche sur une surface de la plaque de réflexion de lumière infrarouge selon la revendication 6 ou 7 afin d'obtenir un premier stratifié ; et
une seconde étape de collage d'une seconde feuille inter-couche sur une surface du premier stratifié opposée à la surface à laquelle est collée la première feuille inter-couche.

**13.** Procédé de fabrication d'une feuille inter-couche stratifiée pour verre selon la revendication 12, comprenant :

une étape, dans la première étape, de décollement du substrat inclus dans la plaque de réflexion de lumière infrarouge du premier stratifié en même temps qu'une étape de collage de la plaque de réflexion de lumière infrarouge et de la première feuille inter-couche ou après celle-ci ; et
une étape, dans la seconde étape, de collage de la seconde feuille inter-couche à la surface du premier stratifié dont le substrat a été décollé.

**14.** Procédé de fabrication de verre feuilleté, comprenant :

une étape de fabrication d'un stratifié pris en sandwich entre deux plaques de verre, par prise en sandwich de la feuille inter-couche stratifiée pour verre feuilleté selon la revendication 8 ou 9 entre les deux plaques de verre ; et
une étape de pressage du stratifié pris en sandwich entre les plaques de verre dans des conditions de chauffage.

**15.** Élément de vitre pour bâtiments ou véhicules,
dans lequel on utilise le stratifié de couches de réflexion de lumière infrarouge selon l'une quelconque des revendications 1 à 5, la plaque de réflexion de lumière infrarouge selon la revendication 6 ou 7, la feuille inter-couche stratifiée pour verre selon la revendication 8 ou 9, ou le verre feuilleté selon l'une ou l'autre des revendications 10 et 11.

Fig.1

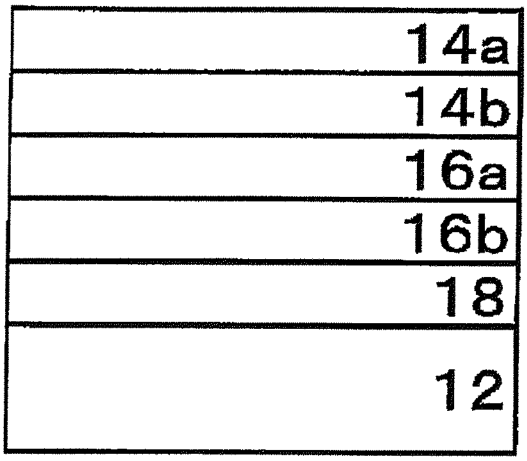


Fig.2

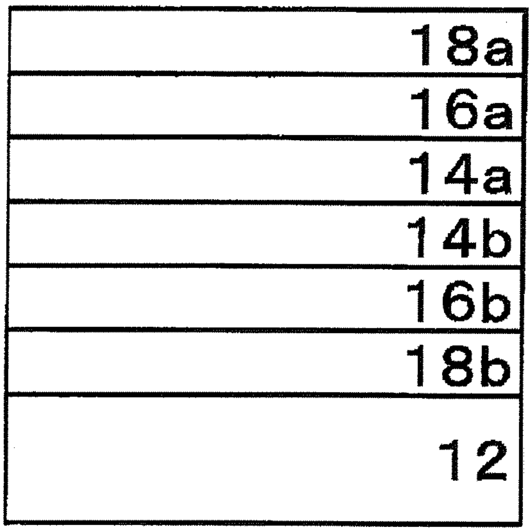

Fig.3

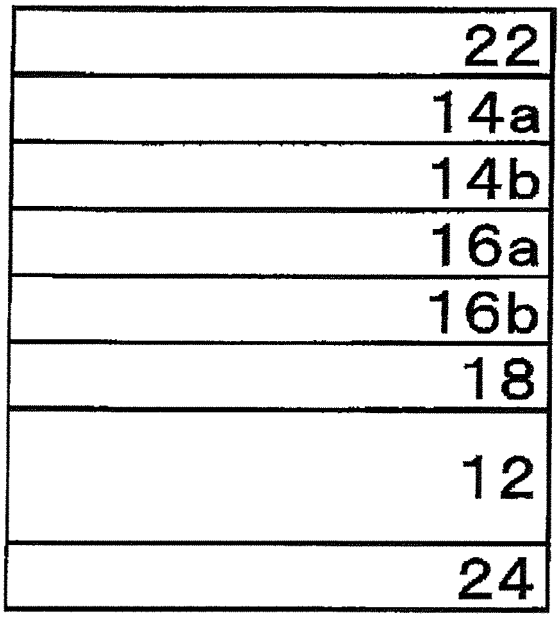


Fig.4

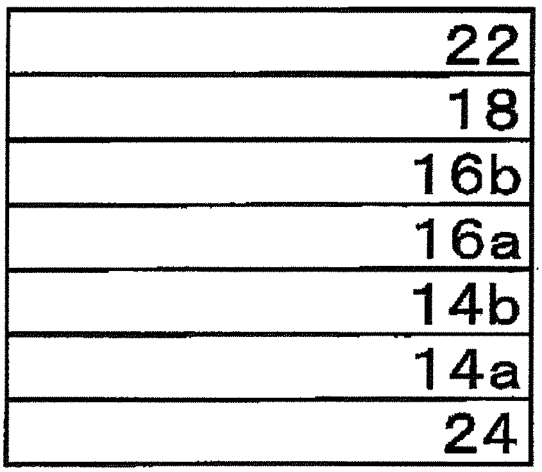

Fig.5

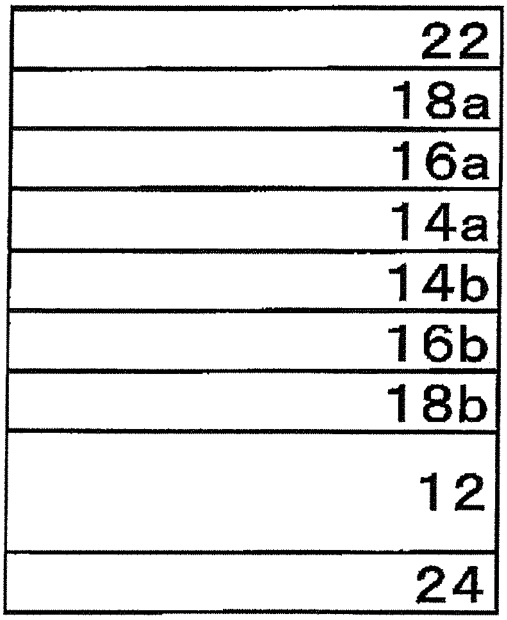


Fig.6

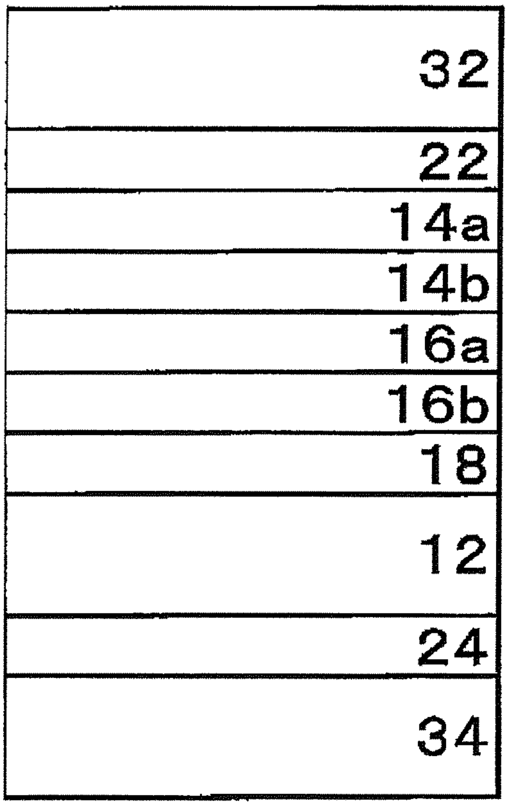

Fig.7

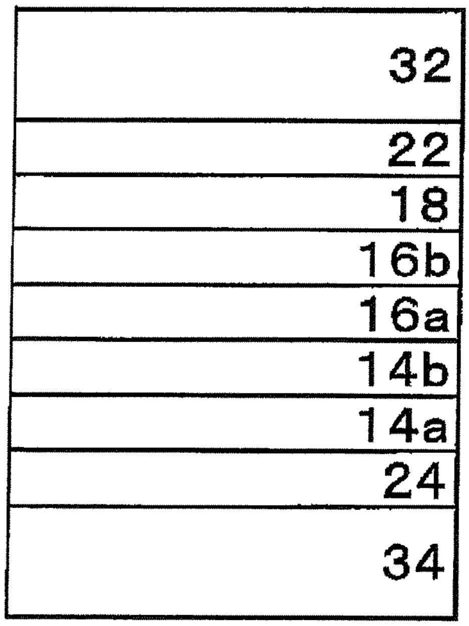
32
22
18
16b
16a
14b
14a
24
34

Fig.8

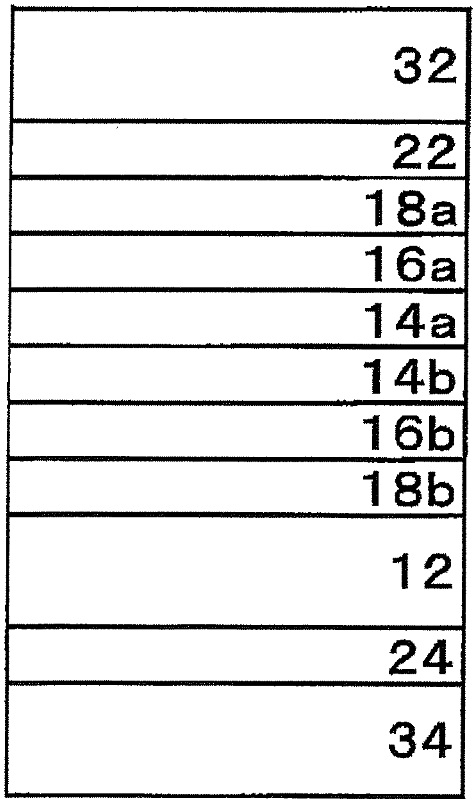
32
22
18a
16a
14a
14b
16b
18b
12
24
34

Fig.9

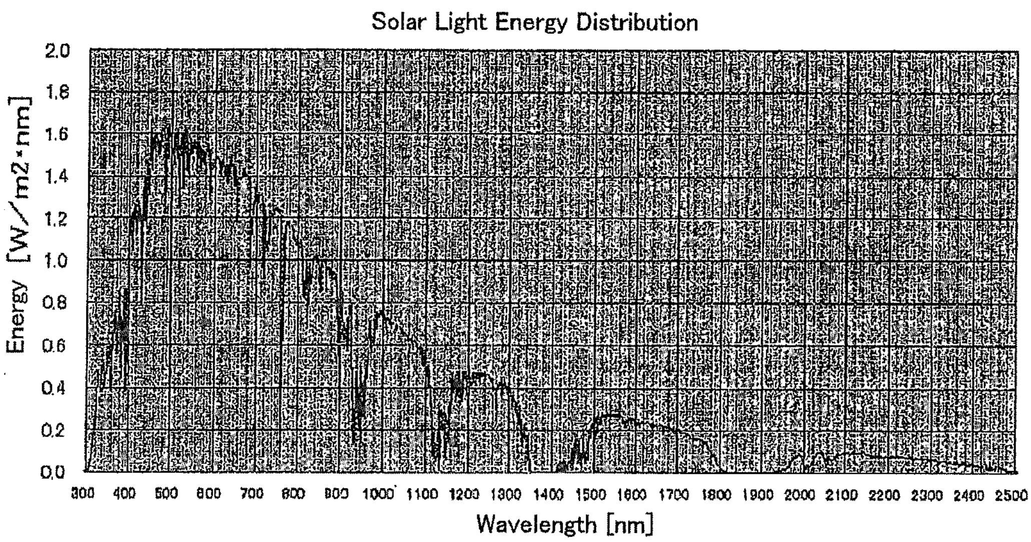
Solar Light Energy Distribution
Energy [W/m2·nm]
2.0
1.8
1.6
1.4
1.2
1.0
0.8
0.6
0.4
0.2
0.0
300 400 500 600 700 800 900 1000 1100 1200 1300 1400 1500 1600 1700 1800 1900 2000 2100 2200 2300 2400 2500
Wavelength [nm]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6263486 A
- JP 2002131531 A
- JP 6194517 A
- JP 4109914 B
- JP 2009514022 T
- JP 3500127 B
- JP 3745221 B
- JP 4504555 T
- JP 2008545556 T
- US 4683327 A
- US 5622648 A
- US 5770107 A
- WO 9522586 A
- WO 9524455 A
- WO 9700600 A
- WO 9823580 A
- WO 9852905 A
- JP 1272551 A
- JP 6016616 A
- JP 7110469 A
- JP 11080081 A
- JP 2001328973 A
- JP 2003287623 A
- US 2367661 A
- US 2367670 A
- US 2448828 A
- US 2722512 A
- US 3046127 A
- US 2951758 A
- US 3549367 A
- JP 60105667 A
- US 4239850 A
- US 4212970 A
- JP 2007272185 A
- JP 2005099248 A
- EP 860475 A
- JP 2005105175 A
- JP 2009067956 A
- JP 2544035 B
- JP 2617223 B


### Non-patent literature cited in the description


- **Y. GOTO.** *Mol. Cryst. Liq. Cryst.,* 1995, vol. 260, 23-28
- *Makromol. Chem.,* 1989, vol. 190, 2255
- *Advanced Materials,* 1993, vol. 5, 107